# EUROPEAN PATENT APPLICATION

(11) **EP 4 615 000 A1**
(43) Date of publication of application: **10.09.2025**
(21) Application number: 23947332.5
(22) Date of filing: 10.11.2023
(51) Int. Cl.: H04R 1/10

(54) **EARPHONE**

(30) Priority: 28.07.2023 CN 202310956970
(71) Applicant: Shenzhen Shokz Co., Ltd., Shenzhen, Guangdong 518108 (CN)
(72) Inventor: YAN, Zeteng, Shenzhen, Guangdong 518108 (CN); ZHENG, Zeying, Shenzhen, Guangdong 518108 (CN); ZHANG, Haofeng, Shenzhen, Guangdong 518108 (CN); LI, Yongjian, Shenzhen, Guangdong 518108 (CN); XU, Jiang, Shenzhen, Guangdong 518108 (CN); XIE, Shuailin, Shenzhen, Guangdong 518108 (CN); ZHU, Guangyuan, Shenzhen, Guangdong 518108 (CN); ZHANG, Lei, Shenzhen, Guangdong 518108 (CN); XIE, Guolin, Shenzhen, Guangdong 518108 (CN); ZHONG, Lei, Shenzhen, Guangdong 518108 (CN); TONG, Peigeng, Shenzhen, Guangdong 518108 (CN); MA, Xiaoyu, Shenzhen, Guangdong 518108 (CN)
(74) Representative: Wang, Bo
(86) International application number: PCT/CN2023/131096
(87) International publication number: WO 2025/025394

(57) **Abstract**

The present disclosure relates to an earphone (100), comprising a housing component (10) configured to form an accommodation space (101) and having a first direction and a second direction orthogonal to the first direction, wherein the housing component (10) further has a first end (102) and a second end (103) arranged opposite to each other along the first direction; an ear hook (2) connected with the housing component (10), wherein in a wearing state, the ear hook (2) is at least partially located at a rear side of an ear of a user, the housing component (10) is located at a front side of the ear of the user along the second direction, and the first end (102) of the housing component (10) at least partially extends into a cavum concha (502) of the ear of the user; a loudspeaker (13) disposed in the accommodation space (101) and configured to provide sound to the ear of the user; wherein in the wearing state, an outer wall surface of the housing component (10) facing the ear of the user is arranged in an arch shape away from the ear of the user in the first direction.

## Description

### TECHNICAL FIELD

The present disclosure relates to the technical field of electronic device, and in particular to an earphone.

### BACKGROUND

With the increasing popularity of electronic devices, the electronic devices have become indispensable tools for social interaction and entertainment in people's daily lives, and people's requirements for electronic devices are also increasing. Electronic devices such as earphones and smart glasses have also been widely used in people's daily lives. They can be used in conjunction with terminal devices such as mobile phones and computers to provide users with an auditory feast.

However, currently some earphones fail to conform to the shape of the user's ear in the wearing state, resulting in issues such as ear compression or discomfort during wearing.

### SUMMARY

The present disclosure provides an earphone, comprising: a housing component configured to form an accommodation space and having a first direction and a second direction orthogonal to the first direction, wherein the housing component further has a first end and a second end arranged opposite to each other along the first direction; an ear hook connected with the housing component, wherein in a wearing state, the ear hook is at least partially located at a rear side of an ear of a user, the housing component is located at a front side of the ear of the user along the second direction, and the first end of the housing component at least partially extends into a cavum concha of the ear of the user; a loudspeaker disposed in the accommodation space and configured to provide sound to the ear of the user; wherein in the wearing state, an outer wall surface of the housing component facing the ear of the user is arranged in an arch shape away from the ear of the user in the first direction.

By setting in the above way, the pressure of the outer wall surface facing the ear of the user on the tragus can be reduced. In addition, it helps to make the first end of the housing component extend into the cavum concha of the ear of the user, thereby improving the wearing stability.

In some embodiments, in the first direction, the first end has a first reference point farthest from the second end, and a distance from an apex of the outer wall surface to the first reference point in the first direction is in a range of 14 mm-20 mm.

In some embodiments, in the second direction, the outer wall surface has a second reference point adjacent to the second end and closest to the ear of the user in the wearing state, and a distance from the second reference point to the first reference point in the first direction is in a range of 20 mm-31 mm.

In some embodiments, the second reference point is configured to abut against a facial skin on a front side of a tragus of the ear of the user in the wearing state.

In some embodiments, a distance from the apex of the outer wall surface to the second reference point in the second direction is in a range of 1.3 mm-2.2 mm.

In some embodiments, in the second direction, the outer wall surface has a third reference point adjacent to the first end and closest to the ear of the user in the wearing state, and a distance from the third reference point to the first reference point in the first direction is in a range of 3 mm-5 mm.

In some embodiments, a distance from the apex of the outer wall surface to the third reference point in the second direction is in a range of 2 mm-3 mm.

In some embodiments, the earphone further comprises a battery. The loudspeaker and the battery are disposed at intervals in the accommodation space along the first direction.

In some embodiments, an inner wall surface of the housing component facing the ear of the user is provided with a partition wall adjacent to an apex of the outer wall surface. The loudspeaker is disposed on a side of the partition wall facing the first end. The battery is disposed on the other side of the partition wall facing the second end.

In some embodiments, the loudspeaker has a first axis, the battery has a second axis, the first axis and the second axis respectively have a positive direction pointing to the ear of the user, and in a reference plane defined by the first direction and the second direction, a projection of the first axis and a projection of the second axis intersect and an intersection angle between the positive direction of the first axis and the positive direction of the second axis is in a range of 11°-14°.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those having ordinary skills in the art, other drawings can be obtained based on these drawings without creative work.
FIG. 1 is a schematic diagram illustrating a contour of a front side of an ear of a user according to some embodiments of the present disclosure;
FIG. 2 is a schematic diagram illustrating an overall structure of an earphone according to some embodiments of the present disclosure;
FIG. 3 is a schematic diagram illustrating an internal structure of an earphone according to some embodiments of the present disclosure;
FIG. 4 is a schematic structural diagram illustrating a first housing of an earphone according to some embodiments of the present disclosure;
FIG. 5 is a schematic diagram illustrating a cross section along an A-A section plane in FIG. 2;
FIG. 6 is a schematic diagram illustrating positions of a portion of reference points on the first housing and the second housing in FIG. 5;
FIG. 7 is a schematic diagram illustrating positions of other reference points on the first housing and the second housing in FIG. 5;
FIG. 8 is a schematic structural diagram illustrating an earphone at another view according to some embodiments of the present disclosure;
FIG. 9 is a schematic structural diagram illustrating a charging case that is used in conjunction with an earphone according to some embodiments of the present disclosure;
FIG. 10 is a schematic structural diagram illustrating an earphone at another view according to some embodiments of the present disclosure;
FIG. 11 is a schematic structural diagram illustrating an earphone according to some embodiments of the present disclosure;
FIG. 12 is a schematic structural diagram illustrating an earphone according to some embodiments of the present disclosure;
FIG. 13 is a schematic structural diagram illustrating an earphone according to some embodiments of the present disclosure;
FIG. 14 is a schematic structural diagram illustrating an earphone according to some embodiments of the present disclosure;
FIG. 15 is a schematic structural diagram illustrating some components of an earphone according to some embodiments of the present disclosure;
FIG. 16 is a schematic structural diagram illustrating other components of an earphone according to some embodiments of the present disclosure;
FIG. 17 is a schematic structural diagram illustrating a front view of the earphone shown in FIG. 2;
FIG. 18 is a schematic diagram illustrating a cross section along an M-M section line of the earphone shown in FIG. 17;
FIG. 19 is a schematic diagram illustrating an enlargement of a partial region C of the earphone shown in FIG. 17;
FIG. 20 is a schematic diagram illustrating an enlargement of a partial region B of the earphone shown in FIG. 17;
FIG. 21 is a schematic diagram illustrating a three-dimensional structure of an earphone according to some embodiments of the present disclosure;
FIG. 22 is a schematic structural diagram illustrating a cross section of the earphone shown in FIG. 21;
FIG. 23 is a schematic diagram illustrating an exploded structure of a core module of the earphone shown in FIG. 21;
FIG. 24 is a schematic structural diagram illustrating a bracket shown in FIG. 23 being assembled in a first accommodation cavity;
FIG. 25 is a schematic diagram illustrating an enlargement of a region A shown in FIG. 24;
FIG. 26 is a schematic diagram illustrating an enlargement of a region A shown in FIG. 24;
FIG. 27 is a schematic diagram illustrating a three-dimensional structure of a loudspeaker shown in FIG. 23;
FIG. 28 is a schematic diagram illustrating an assembly structure of a loudspeaker and a support shown in FIG. 23; and
FIG. 29 is a schematic diagram illustrating a three-dimensional structure of a support shown in FIG. 23.

### DETAILED DESCRIPTION

The present disclosure is described in further detail below in conjunction with the accompanying drawings and embodiments. In particular, it is noted that the following embodiments are only used to illustrate the present disclosure, but do not limit the scope of the present disclosure. Similarly, the following embodiments are only part of the embodiments of the present disclosure rather than all of the embodiments, and all the other embodiments obtained by a person of ordinary skill in the art without creative labor fall within the scope of the protection of the present disclosure.

References to "embodiments" in the present disclosure imply that particular features, structures, or characteristics described in conjunction with embodiments may be included in at least one embodiment of the present disclosure. It is understood by those of skill in the art, both explicitly and implicitly, that the embodiments described in the present disclosure may be combined with other embodiments.

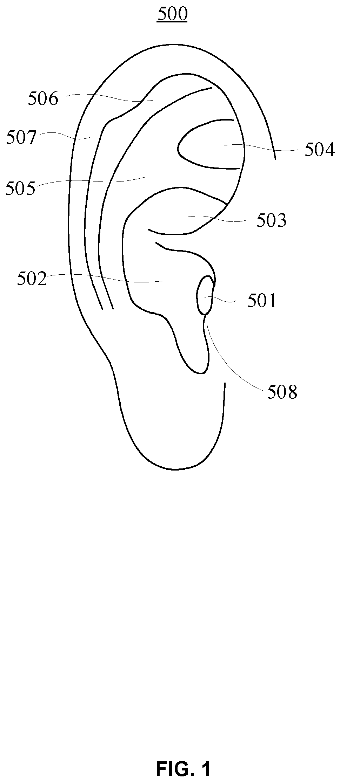

Referring to FIG. 1, an ear 500 of a user may include physiological parts such as an external ear canal 501, a cavum concha 502, a cymba concha 503, a triangular fossa 504, an antihelix 505, a scapha 506, a helix 507, and an antitragus 508. Although the external ear canal 501 has a certain depth and extends to a tympanic membrane of the ear, for ease of description and Referring to FIG. 1, when not otherwise specified in the present disclosure, the external ear canal 501 specifically refers to an entrance (i.e., an ear hole) of the external ear canal 501 away from the tympanic membrane. Furthermore, the physiological parts, such as the cavum concha 502, the cymba concha 503, the triangular fossa 504, etc., have a certain volume and a certain depth. The cavum concha 502 is in direct connection with the external ear canal 501, which means that the ear hole can be simply regarded as being located at a bottom of the cavum concha 502.

Furthermore, different users may have individual differences, resulting in different shapes, sizes, and other dimensional differences of the ear. For ease of description and to minimize (or even eliminate) individual differences among users, a simulator with a head and its (left and right) ears can be produced based on the ANSI: S3.36, S3.25 and IEC: 60318-7 standards, e.g., GRAS 45BC KEMAR. Thus, in the present disclosure, such as "a user wears an earphone 100", "an earphone 100 is in a wearing state", and "in a wearing state" refer to the earphone 100 described in the present disclosure being worn on the ear of the simulator. It should be appreciated that it is precisely due to the individual differences of different users, the earphone 100, when worn by various users, may differ to some extent from the earphone 100 when worn on the ear of the simulator, but such differences should be tolerated.

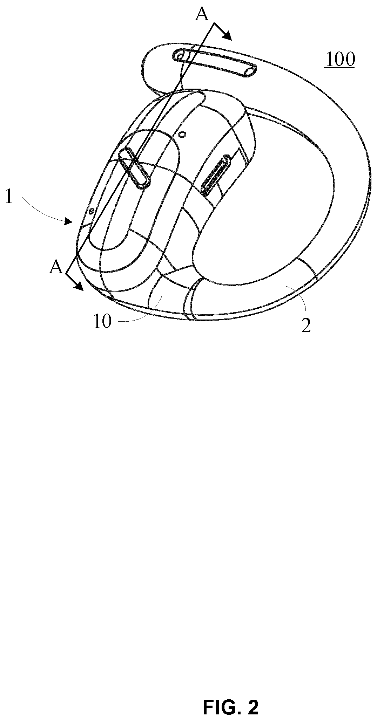

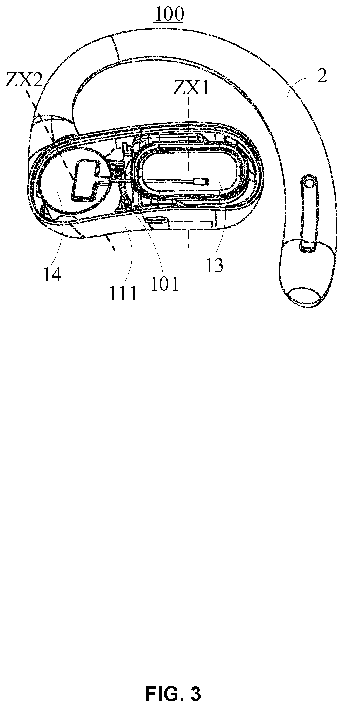

Referring to FIG. 2 to FIG. 5, the earphone 100 may include a core module 1 and an ear hook 2. The core module 1 may include a housing component 10 and a loudspeaker 13. The ear hook 2 may be hook-shaped, and the earphone 100 may be worn at a position near the external ear canal of the ear of the user through the ear hook 2, but not blocking the external ear canal. The ear hook 2 may be connected with the housing component 10. In the wearing state, the housing component 10 is disposed on a front side of the ear, and the ear hook 2 is at least partially disposed on a rear side of the ear of the user, so that the earphone 100 can be hung on the ear. Furthermore, the housing component 10 may be configured to form an accommodation space 101. The loudspeaker 13 may be disposed in the accommodation space 101. A sound outlet may be disposed on the housing component 10 for transmitting air-conducted sound provided by the loudspeaker 13 to the external ear canal of the ear of the user.

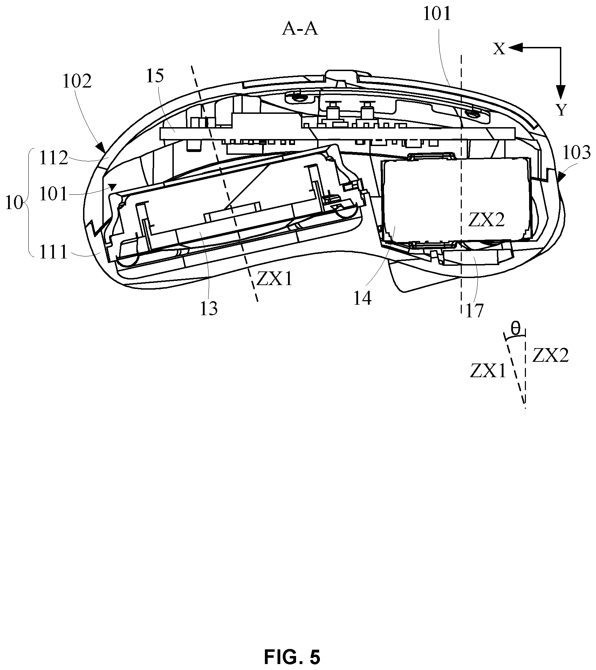

For ease of describing the shape of the housing assembly 10, the present disclosure defines the housing assembly 10 as having a first direction X and a second direction Y, with the first direction X being orthogonal to the second direction Y (refer to FIG. 5). The first direction X refers to a length direction of the housing assembly 10, and the second direction Y refers to a thickness direction of the housing assembly 10.

In the wearing state, the housing component 10 may be located at a front side of the ear of the user along the second direction Y. The housing component 10 may further have a first end 102 and a second end 103 arranged opposite to each other along the first direction X. In some embodiments, the first end 102 refers to a portion facing the cavum concha 502 of the user in a wearing state, and the second end 103 refers to a portion farther away from the cavum concha 502 of the user relative to the first end 102. In some embodiments, the first end 102 refers to a portion closer to the rear side of the ear of the user in the wearing state, and the second end 103 refers to a portion farther away from the rear side of the ear of the user relative to the first end 102. The second end 103 may be connected with the ear hook 2, which may be referred to as a connection end 103 hereinafter, and the first end 102 may also be referred to as a free end 102 hereinafter.

In some embodiments, the first end 102 of the housing component 10 at least partially extends into the cavum concha 502 of the ear of the user to make the external ear canal of the ear of the user in an open state. The external ear canal of the ear of the user being in an open state means that the housing component 10 does not completely close the external ear canal, or the housing component 10 does not block the external ear canal, so that the external ear canal can be connected to an external environment. In addition, due to individual differences among different users, when the earphone 100 is worn by different users, the housing component 10 may partially block the external ear canal, but the external ear canal is still not completely blocked and can still be connected to the external environment.

In some embodiments, referring to FIG. 5, FIG. 6, and FIG. 7, in the second direction Y, an outer wall surface LS2 of the housing component 10 of a core module 1 facing the ear of the user in the wearing state is arranged in an arch shape away from the ear of the user. In this way, the design of the housing component 10 can more closely fit the shape of the ear of the user, reducing the pressure of the housing component 10 on the ear of the user, especially on the tragus 508. In addition, the restriction on the extension direction of the plane can be eliminated, which is conducive to the first end 102 of the housing component 10 extending into the cavum concha 502 of the user more smoothly, thereby improving the wearing comfort and stability.

The structural design of the outer wall surface LS2 of the housing component 10 facing the ear of the user in the wearing state affects the structure of the entire housing component 10, which in turn affects the wearing comfort of the user. For example, the structure of the outer wall surface LS2 affects a position of the first end 102 of the housing component 10. If the setting of the outer wall surface LS2 causes the housing component 10 to extend too short, it may cause the first end 102 of the housing component 10 to be difficult to extend into the cavum concha 502 of the user, or it may cause the outer wall surface LS2 not to avoid the tragus 508 of the user well when the first end 102 of the housing component 10 extends into the cavum concha 502 of the user, causing excessive pressure on the tragus 508 of the user. Similarly, if the setting of the outer wall surface LS2 causes the housing component 10 to extend too long, it may increase the pressure of the first end 102 on the antihelix 505 and the cavum concha 502, or it may cause the outer wall surface LS2 not to avoid the tragus 508 of the user well, causing excessive pressure on the tragus 508 of the user.

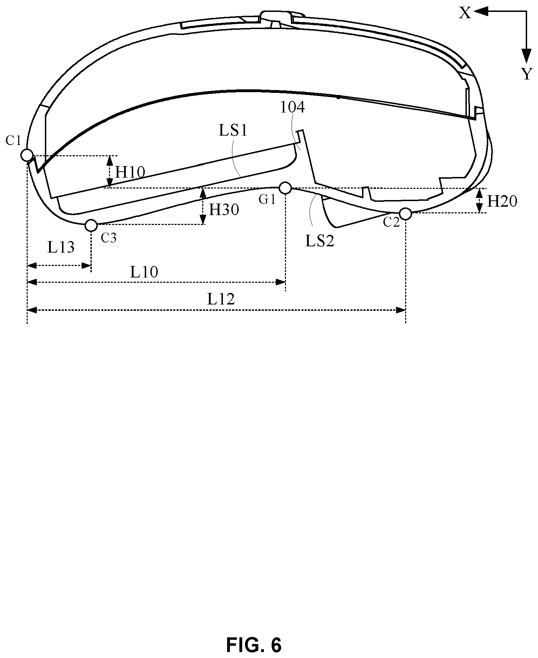

Referring to FIG. 6, in some embodiments, in the first direction X, the first end 102 has a first reference point C1 farthest from the second end 103. In some embodiments, the first reference point C1 is a point of the first end 102 farthest from the second end 103 along the first direction X. In some embodiments, the first reference point C1 is a point of the first end 102 farthest from the second end 103 along a tangent direction of an apex of the outer wall surface LS2. In order to avoid the arch setting of the outer wall surface LS2 causing a portion of the housing component 10 closer to the first end 102 to be too short or too long, making the first end 102 fail to better cooperate with the cavum concha 502 and reducing the wearing comfort of the user, a distance L10 from an apex G1 of the outer wall surface LS2 to the first reference point C1 in the first direction X may be in a range of 14 mm-20 mm. The apex G1 of the outer wall surface LS2 refers to a point with the deepest depression in a region of the arch shape or a point farthest from the ear of the user in the region of the arch shape. The distance from the apex G1 to the first reference point C1 in the first direction X refers to a projection length in the first direction X of a connection line between the apex G1 and the first reference point C1.

Furthermore, in order to make the earphone 100 adapt to the ear shape of the user, the design of the distance L10 from the apex G1 of the outer wall surface LS2 to the first reference point C1 in the first direction X may be more targeted. In some embodiments, if the ear of the user is relatively small, in order to avoid the arch setting of the outer wall surface LS2 causing the portion of the housing component 10 closer to the first end 102 to be too long, causing pressure on the cavum concha 502 of the ear of the user, the distance L10 from the apex G1 of the outer wall surface LS2 to the first reference point C1 in the first direction X is in a range of 14 mm-16 mm. In some embodiments, if the ear of the user is relatively large, in order to avoid the arch setting of the outer wall surface LS2 causing the portion of the housing component 10 closer to the first end 102 to be too short, causing the first end 102 to fail to abut against the cavum concha 502 well, and causing unstable wearing, the distance L10 from the apex G1 of the outer wall surface LS2 to the first reference point C1 in the first direction X is in a range of 18 mm-20 mm. Specifically, the distance L10 from the apex G1 of the outer wall surface LS2 to the first reference point C1 in the first direction X is 14.1 mm, 15.2 mm, 16.5 mm, 17.7 mm, 18.6 mm, or 19.9 mm.

In some embodiments, in the second direction Y, the outer wall surface LS2 of the housing component 10 facing the ear of the user has a second reference point C2 adjacent to the second end 103 and closest to the ear of the user in the wearing state. In some embodiments, the second reference point C2 is a point of a portion of the outer wall surface LS2 close to the second end 103 and farthest from the apex G1 or a decorative cover (described later) in the second direction Y. In order to avoid the situation that the second end is not reliably supported on a facial region of the user when the first end 102 extends into the cavum concha 502, resulting in a reduction in the wearing stability, a distance L12 from the second reference point C2 to the first reference point C1 in the first direction X may be in a range of 20 mm-31 mm. In addition, the second reference point C2 may also be a lowest point in the outer wall surface LS2 of the housing component 10 facing the ear of the user in the arch shape. In some embodiments, the second reference point C2 is configured to abut against a facial skin on a front side of the tragus 508 of the ear of the user in the wearing state.

Furthermore, in order to make the earphone 100 adapt to the ear shape of the user, the design of the distance L12 from the second reference point C2 to the first reference point C1 in the first direction X may be more targeted. In some embodiments, if the ear of the user is relatively small, in order to avoid the first end 102 failing to abut against the cavum concha 502 well when the second reference point C2 is supported on the antitragus, the distance L12 from the second reference point C2 to the first reference point C1 in the first direction X is in a range of 20 mm-24 mm. In some embodiments, if the ear of the user is relatively large, in order to avoid a region where the second reference point C2 is located being supported on the antitragus and excessively pressuring the antitragus of the user, the distance L12 from the second reference point C2 to the first reference point C1 in the first direction X is in a range of 26 mm-31 mm. Specifically, the distance L12 from the second reference point C2 to the first reference point C1 in the first direction X is 21.9 mm, 23.4 mm, 25 mm, 26.4 mm, or 28.02 mm.

In this case, the earphone 100 can be more stably supported on a region of the facial skin on the front side of the tragus 508 of the user through the second reference point C2. In addition, when the earphone 100 is supported on the region of the facial skin on the front side of the tragus 508 of the user through the second reference point C2, the first end 102 can extend into the cavum concha 502 and is not likely to cause excessive pressure on the antihelix 505.

Optionally, a distance H20 from the apex G1 of the outer wall surface LS2 to the second reference point C2 in the second direction Y is in a range of 1.3 mm-2.2 mm. Furthermore, in order to make the earphone 100 adapt to the ear shape of the user, the distance H20 from the apex G1 of the outer wall surface LS2 to the second reference point C2 in the second direction Y may be more targeted. Specifically, the distance H20 from the apex G1 of the outer wall surface LS2 to the second reference point C2 in the second direction Y is 1.4 mm, 1.5 mm, 1.6 mm, 1.7 mm, 1.8 mm, 1.9 mm, 2.0 mm, or 2.1 mm. In this case, when the earphone 100 is supported on the region of the facial skin on the front side of the tragus 508 of the user through the second reference point C2, the outer wall surface LS2 is not likely to cause excessive pressure on the tragus 508 of the user.

In general, due to the volume limitation of the cavum concha 502, if the first end 102 is too large or too thick, it may be difficult to extend into the cavum concha 502. If the first end 102 is too small, an internal space is not easy to use.

Optionally, in the second direction Y, the outer wall surface LS2 of the housing component 10 facing the ear of the user has a third reference point C3 adjacent to the first end 102 and closest to the ear of the user in the wearing state. In some embodiments, the third reference point C3 is a point of a portion of the outer wall surface LS2 close to the first end 102 and farthest from the apex G1 in the second direction Y. In some embodiments, the third reference point C3 is another lowest point in the outer wall surface LS2 of the housing component 10 facing the ear of the user in an arch shape.

Optionally, a distance L13 from the third reference point C3 to the first reference point C1 in the first direction X is in a range of 3 mm-5 mm. Furthermore, in order to make the earphone 100 adapt to the ear shape of the user and increase the internal space of the housing component 10, the distance L13 from the third reference point C3 to the first reference point C1 in the first direction X should be as small as possible without causing excessive pressure on the cavum concha 502. For example, the distance L13 from the third reference point C3 to the first reference point C1 in the first direction X is in a range of 3 mm-3.5 mm, 3.51 mm-4 mm, 4.01 mm-4.5 mm, or 4.51 mm-5 mm. For example, the distance L13 from the third reference point C3 to the first reference point C1 in the first direction X is 3.45 mm, 3.8 mm, 4.29 mm, or 4.53 mm. In this case, the first end 102 of the housing component 10 can easily extend into the cavum concha 502, and the internal space is relatively easy to use (e.g., to facilitate the assembly of the loudspeaker 13).

Considering that if a depression degree of the apex G1 of the outer wall surface LS2 toward an inner side of the housing component 10 is too small, the outer wall surface LS2 may cause excessive pressure on the tragus 508 in the wearing state. If the depression degree of the apex G1 of the outer wall surface LS2 toward the inner side of the housing component 10 is too large, a curvature of the outer wall surface LS2 and a curvature of the corresponding inner wall surface LS1 (described later) of the housing component 10 may be too large, which is not conducive to the layout of various components inside the housing component 10.

Optionally, a distance H30 from the apex G1 of the outer wall surface LS2 to the third reference point C3 in the second direction Y is in a range of 2 mm-3 mm. For example, the distance H30 from the apex G1 of the outer wall surface LS2 to the third reference point C3 in the second direction Y is 2.1 mm, 2.2 mm, 2.3 mm, 2.4 mm, 2.5 mm, 2.6 mm, 2.7 mm, 2.8 mm or 2.9 mm. In this case, in the wearing state, the outer wall surface LS2 is not liable to cause excessive pressure on the tragus 508, and the outer wall surface LS2 of the housing component 10 is not excessively bent.

In the existing earphone 100, the battery 14 and the loudspeaker 13 are usually located in two independent housings, which means that a relatively long wire is required to connect the battery 14 and the loudspeaker 13. During an assembly process of the earphone 100 and the using process of the user, the wire is often broken due to an external force, causing the earphone 100 not to be used normally. Meanwhile, the battery 14 and the loudspeaker 13 being located in two housings increases the size of the earphone 100, which in turn reduces the wearing experience of the user.

In some embodiments, the earphone 100 further includes the battery 14, and battery 14 is capable of supplying power to the loudspeaker 13. In the wearing state, since the first end 102 of the housing component 10 is closer to the external ear canal of the ear of the user relative to the second end 103, the loudspeaker 13 may be arranged at a position of the housing component 10 closer to the first end 102, and the battery 14 may be arranged at a position of the housing component 10 closer to the second end 103. In this case, it is more conducive for an air-conducted sound generated by the loudspeaker 13 to be transmitted to the external ear canal of the user, thereby ensuring the listening effect of the user.

In some embodiments, the loudspeaker 13 and the battery 14 are disposed in the accommodation space 101 formed by the housing component 10 at intervals along the first direction X. In this case, the loudspeaker 13 and the battery 14 are assembled in the housing component 10 simultaneously, thereby improving the assembly efficiency, reducing the length of the wire, and making the wire arranged in the housing component 10 less likely to be damaged.

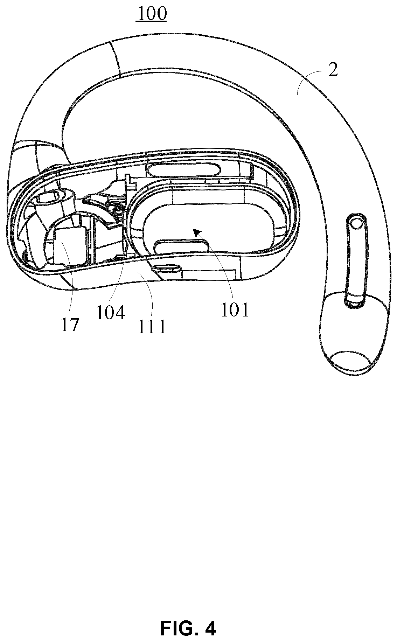

Furthermore, a partition wall 104 may be provided in the accommodation space 101 of the housing component 10 (see FIG. 6). The partition wall 104 may be configured to separate the loudspeaker 13 and the battery 14 to prevent the loudspeaker 13 from being damaged in case of leakage of the battery 14, or the like. In some embodiments, the partition wall 104 is integrated into the housing component 10, which improves the consistency of the housing component 10. In some embodiments, the partition wall 104 is separately formed and disposed in the housing component 10 by snap-fitting, gluing, etc., which reduces the processing difficulty of the housing component 10. Referring to FIG. 4 and FIG. 5, for example, the partition wall 104 adjacent to the apex G1 of the outer wall surface LS2 is provided on the inner wall surface LS1 of the housing component 10 facing the ear of the user, the loudspeaker 13 is located in an accommodation space formed by the partition wall 104 and the first end 102, and the battery 14 is located in an accommodation space formed by the partition wall 104 and the second end 103.

In some embodiments, the loudspeaker 13 has a first axis ZX1, the battery 14 has a second axis ZX2, and the first axis ZX1 and the second axis ZX2 respectively have positive direction pointing to the ear of the user in the wearing state. In a reference plane defined by the first direction X and the second direction Y, a projection of the positive direction of the first axis ZX1 and a projection of the positive direction of the second axis ZX2 in the reference plane may intersect. In other words, the loudspeaker 13 and the battery 14 may be arranged relatively tilted. In this way, the space utilization rate of the housing component 10 along the first direction X can be enhanced, which ensures that the housing component 10 can accommodate various electronic components without increasing the volume, and avoids the housing component 10 of the earphone 100 being too large and affecting the wearing experience of the user. The first axis ZX1 may be parallel to a vibration direction of a diaphragm of the loudspeaker 13 and passes through the center of gravity of the loudspeaker 13, the geometric center of an end surface of the loudspeaker 13 (e.g., circular end surface, runway shaped end surface), or the axis of the centroid of the loudspeaker 13. The second axis ZX2 refers to an axis passing through the axis of symmetry of the battery 14, the geometric centers of two end surfaces of the battery 14, or the axis of centroid of the battery 14.

Furthermore, referring to FIG. 5, an intersection angle θ between the projection of the positive direction of the first axis ZX1 and the projection of the positive direction of the second axis ZX2 in the reference plane is an acute angle. In order to ensure that a tilt angle between the battery 14 and the loudspeaker 13 is not too large while reducing the size of the housing component 10 along the first direction X, and avoiding the size of the housing component 10 in the second direction Y increasing, the intersection angle θ between the projection of the positive direction of the first axis ZX1 and the projection of the positive direction of the second axis ZX2 in the reference plane may be in a range of 10°-14° or in a range of 11°-14°. For example, the intersection angle θ is 10°, 10.5°, 11°, 11.5°, 12°, 12.5°, 13°, 13.5° or 14°. In some embodiments, the first axis ZX1 and the second axis ZX2 are parallel to the reference plane, and in this case, an angle between the positive direction of the first axis ZX1 and the positive direction of the second axis ZX2 is equal to the intersection angle θ.

In some embodiments, on the reference plane defined by the first direction X and the second direction Y, a radial size of the loudspeaker 13 is greater than a radial size of the battery 14, the second direction Y has a positive direction pointing to the ear of the user, and an intersection angle θ1 between the projection of the positive direction of the first axis ZX1 in the reference plane and the positive direction of the second direction Y is greater than an intersection angle θ2 between the projection of the positive direction of the second axis ZX2 in the reference plane and the positive direction of the second direction Y. In some embodiments, the second axis ZX2 is arranged parallel to the second direction Y, so that the assembly difficulty of the battery 14 can be reduced. The radial size of the loudspeaker 13 refers to a length of a cross section on the reference plane in a direction perpendicular to the first axis ZX1. The radial size of the battery 14 refers to a length of a cross section on the reference plane in a direction perpendicular to the first axis ZX2.

In this case, since the radial size of the loudspeaker 13 is greater than the radial size of the battery 14, if the loudspeaker 13 and the battery 14 are arranged side by side along the first direction X, a space occupied by the loudspeaker 13 along the first direction X is relatively large. Accordingly, when the loudspeaker 13 is arranged obliquely with respect to the second direction Y, compared with the battery 14 being arranged obliquely with respect to the second direction Y, an influence on a change degree of a length of a projection of the housing component 10 in the first direction X is greater, thereby reducing the length of the housing component 10 in the first direction X.

The earphone 100 may further include a circuit board 15. The circuit board 15 may be disposed in the accommodation space 101 formed by the housing component 10 and located on a side away from the ear of the user relative to the loudspeaker 13 and the battery 14. In some embodiments, one circuit board 15 is provided, and the wire of the battery 14 and the loudspeaker 13 is connected for control. A projection of the circuit board 15 along the second direction Y may at least partially overlap with the loudspeaker 13 and the battery 14. Referring to FIG. 5, the circuit board 15 is arranged along the first direction X. In this way, the space utilization rate is increased and the production cost is reduced while ensuring the performance of the loudspeaker 13 and the battery 14. In some embodiments, two circuit boards 15 are provided, and the two circuit boards 15 are electrically connected with the battery 14 and the loudspeaker 13, respectively, and axes of the two circuit boards 15 are parallel to the first axis ZX1 of the loudspeaker 13 and the second axis ZX2 of the battery 14, respectively. In this way, the volume of the housing component 10 can be further reduced.

In some embodiments, the housing component 10 includes a first housing 111 and a second housing 112 that cooperate with each other along the second direction Y. The loudspeaker 13 and the battery 14 may be fixed on the first housing 111, the first housing 111 may be closer to the ear of the user relative to the second housing 112 in the wearing state, and the circuit board 15 may be fixed on the second housing 112. In this case, the assembly, disassembly, and maintenance of the earphone 100 can be facilitated. The circuit board 15 may be fixed on the second housing 112 of the housing component 10 by hot melting. Specifically, the second housing 112 may be provided with a plurality of hot melting columns, and the circuit board 15 may be provided with a plurality of corresponding through holes. During assembly, the through holes disposed on the circuit board 15 may cooperate with the hot melting columns disposed on the second housing 112, and the circuit board 15 may be fixed on the second housing by hot melting.

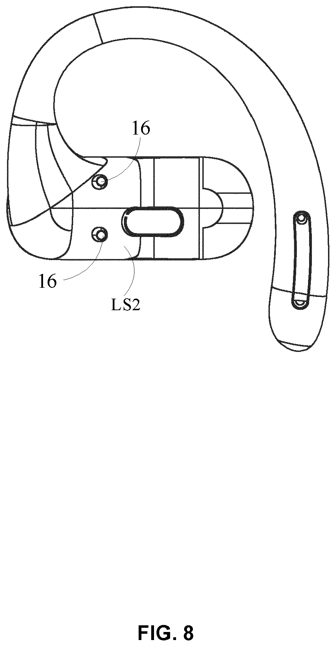

Referring to FIG. 5 and FIG. 8, the earphone 100 further includes a charging interface 16 disposed on the first housing 111 and a magnetic suction element 17 disposed between the battery 14 and the first housing 111 along the second axis ZX2. The magnetic suction element 17 is disposed between the battery 14 and the first housing 111, so that the accommodation space 101 can be fully utilized to increase the space utilization rate. In this case, the earphone 100 may be used in conjunction with a charging case 900 with a magnetic suction charging function.

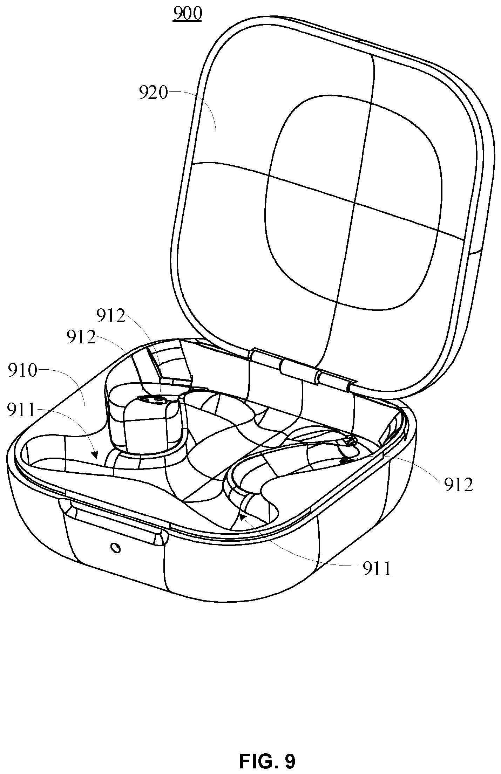

Referring to FIG. 9, the charging case 900 includes a lower housing component 910 and an upper housing component 920. The lower housing component 910 may be provided with two profiling recesses 911 for accommodating the earphone 100 respectively, and the upper housing component 920 may be configured to cover the lower housing component 910 to close the profiling recesses 911.

Furthermore, the charging case 900 may include a main control circuit board disposed in the lower housing component 910 and electrode terminals 912 disposed on the main control circuit board. A plurality of electrode terminals 912 may be provided as required. For example, two electrode terminals 912 are provided. The electrode terminals 912 may be exposed in the profiling recesses 911. When any earphone 100 is placed in the charging case 900, the charging interface 16 in the earphone 100 may contact the electrode terminals 912 in the charging case 900 in a one-to-one correspondence manner to meet the requirements of charging, detection, and other functions. Correspondingly, the electrode terminals 912 may include a positive power supply terminal and a negative power supply terminal, and may further include a detection terminal. The three terminals may be connected in pairs to form a triangle, such as an equilateral triangle, or they may be arranged in a spaced manner along a straight line, for example, the three terminals may be spaced apart and colinear.

In addition, the charging case 900 may include a magnetic suction structure (not shown in the figure) disposed in the lower housing component 910. A plurality of magnetic suction structures may be provided as required. For example, two magnetic suction structures are provided. After any earphone 100 is placed in the profiling recesses 911, the magnetic suction structures and the magnetic suction element 17 in the earphone 100 may form magnetic suction pairs, so that the charging interface 16 and the electrode terminals 912 are in one-to-one contact.

When the earphone 100 is in the wearing state, the first end 102 of the housing component 10 may need to extend into the cavum concha 502 of the user. Accordingly, if a shape of the outer wall surface LS2 of the first end 102 of the housing component 10 that is away from the ear of the user cannot maintain a good fit with the cavum concha 502, the earphone 100 may increase the foreign body sensation of the user in the wearing state, resulting in a reduction in user experience.

In some embodiments, the first direction X has a positive direction pointing from the second end 103 to the first end 102, and the outer wall surface LS3 of the housing component 10 away from the ear of the user includes a first arc-shaped transition region 105. On the reference plane defined by the first direction X and the second direction Y, the first arc-shaped transition region 105 may gradually approach the ear of the user along the positive direction of the first direction X, thereby forming a first portion of the first end 102. In this way, an outer surface of the housing component 10 can be gradually bent toward a side where the ear of the user is located, thereby better adapting to the shape of the cavum concha 502 and reducing the foreign body sensation of the user in the wearing state.

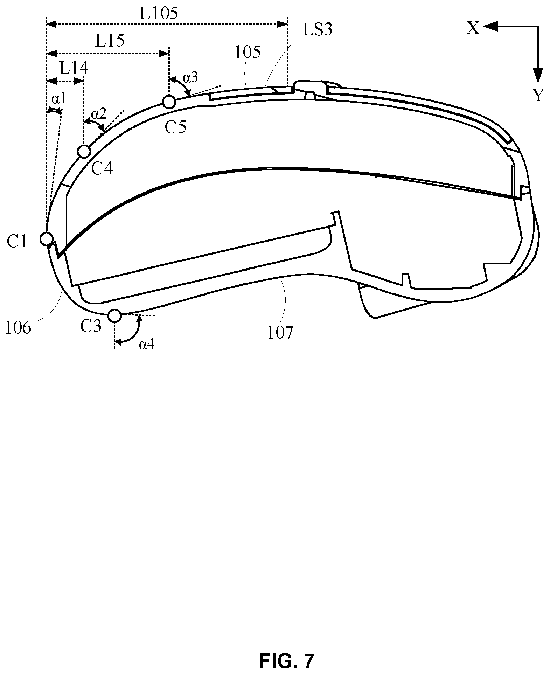

Referring to FIG. 7, the curvature radius of the first arc-shaped transition region 105 gradually decreases along the positive direction of the first direction X. In this case, the curvature radius of a side of a first arc-shaped transition region away from the ear of the user is relatively large, which facilitates the arrangement of components inside the housing component 10.

Considering the tilted setting of the loudspeaker 13 and the battery 14, if an extension length of the first arc-shaped transition region 105 in the first direction X is too small, it may cause a part of the housing component 10 to have a relatively large size in a thickness direction, and the space utilization rate inside the housing component 10 is reduced. In some embodiments, an extension component L105 of the first arc-shaped transition region 105 along the first direction X is not less than 16 mm. In this case, the thickness of each portion of the housing component 10 can be within a reasonable range, and the space utilization rate inside the housing component 10 can be improved.

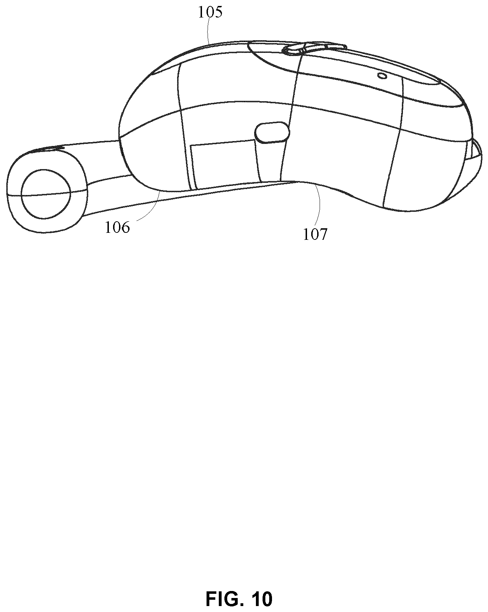

As described above, in the first direction X, the first end 102 has the first reference point C1 farthest from the second end 103. The first reference point C1 is described above, which is not repeated here. At the first reference point C1, an angle α1 between a tangent line of the first arc-shaped transition region 105 and the second direction Y may be in a range of 5°-8°. For example, at the first reference point C1, the angle α1 between the tangent line of the first arc-shaped transition region 105 and the second direction Y is 5°, 5.5°, 6°, 6.5°, 7°, 7.5°, or 8°. In some embodiments, referring to FIG. 7 and FIG. 10, the first arc-shaped transition region 105 further has a first intermediate reference point C4 at a distance L14 of 1.8 mm-3 mm from the first reference point C1 along the first direction X. At the first intermediate reference point C4, an angle α2 between the tangent line of the first arc-shaped transition region 105 and the second direction Y may be in a range of 35°-53°. In some embodiments, the first arc-shaped transition region 105 has a second intermediate reference point C5 at a distance L15 of 6 mm-9 mm from the first reference point C1 along the first direction X. An angle α3 between the tangent line of the first arc-shaped transition region 105 and the second direction Y may be in a range of 60°-80°.

As described above, by sequentially limiting the shape of the first arc-shaped transition region 105 at the first reference point C1, the first intermediate reference point C4, and the second intermediate reference point C5, the first arc-shaped transition region 105 can effectively adapt to the shape of the cavum concha 502 of the user.

In some embodiments, the distance L14 between the first intermediate reference point C4 and the first reference point C1 in the first direction X is 2.35 mm. At the first intermediate reference point C4, the angle α2 between the tangent line of the first arc-shaped transition region 105 and the second direction Y is 43.91°. The distance L14 between the second intermediate reference point C5 and the first reference point C1 in the first direction X is 7.43 mm. At the second intermediate reference point C5, the angle α3 between the tangent line of the first arc-shaped transition region 105 and the second direction Y is 70.8°.

In some embodiments, in the second direction Y, a side of the housing component 10 facing the ear of the user has the third reference point C3 adjacent to the first end 102 and closest to the ear of the user, the outer wall surface LS2 of the housing component 10 facing the ear of the user includes a second arc-shaped transition region 106 between the first reference point C1 and the third reference point C3, and the first direction X has a negative direction pointing from the first end 102 to the second end 103. In the negative direction of the first direction X, the second arc-shaped transition region 106 may gradually approach the ear of the user, thereby forming a second portion of the first end 102. In some embodiments, a curvature radius of the second arc-shaped transition region 106 gradually increases along the negative direction of the first direction X, and gradually approaches the ear of the user, thereby forming the second portion of the first end 102.

In this way, the shape of the first end 102 can better fit the shape of the interior of the cavum concha, so as to reduce the foreign body sensation when the first end 102 extends into the cavum concha 502, thereby improving the wearing experience of the user.

In some embodiments, the distance L13 from the third reference point C3 to the first reference point C1 in the first direction X is in a range of 3 mm-6 mm. In some embodiments, at the third reference point C3, an angle α4 between the tangent line of the second arc-shaped transition region 106 and the second direction Y is in a range of 75°-95°.

In some embodiments, the distance L13 from the third reference point C3 to the first reference point C1 in the first direction X is 4.29 mm. At the third reference point C3, the angle α4 between the tangent line of the second arc-shaped transition region 106 and the second direction Y is 84.9°.

In this way, the projection length between the third reference point C3 and the first reference point C1 in the first direction X, the projection length between the third reference point C3 and the first reference point C1 in the second direction Y, and a slope of the second arc-shaped transition region 106 therebetween are limited respectively, so that the second arc-shaped transition region 106 can better adapt to the interior of the cavum concha 502 of the user, thereby reducing the foreign body sensation.

Furthermore, the outer wall surface LS2 of the housing component 10 facing the ear of the user may further include a third arc-shaped transition region 107 disposed on a side of the third reference point C3 away from the first reference point C1, and the third arc-shaped transition region 107 may be arranged in an arch shape away from the ear of the user. In the first direction X, a distance L10 from an apex G1 of the third arc-shaped transition region 107 to the first reference point C1 in the first direction X may be in a range of 15 mm-18 mm, and a distance H10 from the apex G1 of the third arc-shaped transition region 107 to the first reference point C1 in the second direction Y may be in a range of 1 mm-3 mm.

In some embodiments, the distance L10 from the apex G1 of the third arc-shaped transition region 107 to the first reference point C1 in the first direction X is 17.7 mm, and the distance H10 from the apex G1 of the third arc-shaped transition region 107 to the first reference point C1 in the second direction Y is 1.91 mm. In this case, when the earphone 100 is in the wearing state, the apex G1 of the third arc-shaped transition region 107 is approximately located on an outer side of the tragus 508 of the user, thereby reducing the possibility of causing pressure on the tragus 508.

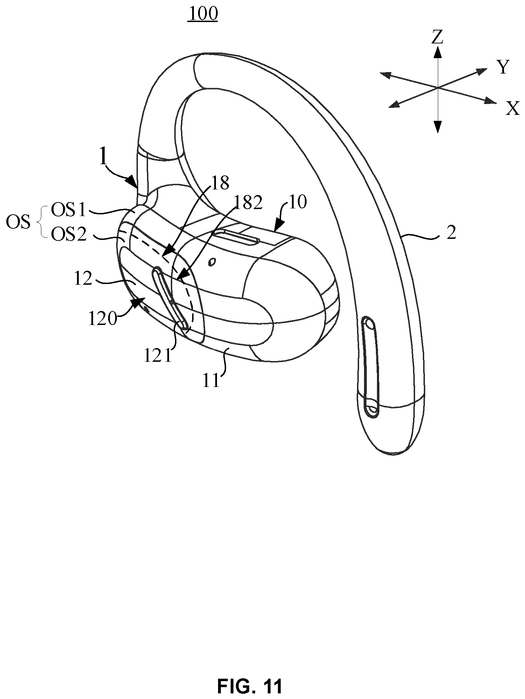

As shown in FIG. 11, as described above, the core module 1 includes the housing component 10. The core module 1 may further include the loudspeaker 13 and battery 14, etc.

In some embodiments, as shown in FIG. 11, the housing component 10 includes a housing 11 and a decorative cover 12. The housing 11 may have an outer side surface away from the ear of the user in the wearing state. The decorative cover 12 may be disposed on an outer side surface OS1 of the housing 11 and configured to form a touch positioning region 120 for the user to perform touch positioning. The core module 1 may further include a touch module 18. The touch module 18 may be disposed on the housing 11 and have a touch detection region 182 that at least partially overlaps with the touch positioning region 120. When the user touches a corresponding region on the decorative cover 12, it can be detected by the touch detection region 182.

The touch positioning region 120 may be configured to position the touch detection region 182. After the user feels the touch positioning region 120, the user can roughly know that the user has reached or is close to a region available for touch operation. The touch detection region 182 may detect the touch operation of the user. The touch module 18 may detect the touch operation of the user through the touch detection region 182, so as to realize touch sensing, and enable the earphone 100 to achieve a human-computer interaction function with the user, such as volume adjustment, power on and off control, song switching, play, and pause, and Bluetooth connection or disconnection operations, switching Bluetooth connection devices, and other operations.

Furthermore, the housing 11 and/or the decorative cover 12 may be provided with a positioning protrusion 121. The positioning protrusion 121 may be disposed in the touch positioning region 120 and protrude from the outer side surface OS1 of the decorative cover 12 away from the housing 11. On the basis of providing primary touch navigation positioning in the touch positioning region 120, by setting the positioning protrusion 121 to protrude from the outer side surface OS1 of the decorative cover 12 away from the housing 11, it is convenient for the user to touch the positioning protrusion 121 when touching the housing 11, so that the positioning protrusion 121 can achieve secondary touch navigation positioning based on the decorative cover 12, and the user can more accurately locate the touch detection region 182 through the positioning protrusion 121, thereby improving the convenience of touch operation. Moreover, the decorative cover 12 can achieve a unique visual effect in decoration to the earphone 100, and the decorative cover 12 is combined with the touch detection region 182 (at least partially overlapped) based on the unique visual effect, so that an additional touch detection region is not required, making the volume of the earphone 100 smaller. The visual effect of the decorative cover 12 can make the user easily know the position of the touch detection region 182, thereby reducing the learning cost of the user and improving the convenience of the touch operation of the user.

In some embodiments, as shown in FIG. 11, the outer side surface OS1 of the housing 11 and an outer surface OS2 of the decorative cover 12 jointly form an outer side surface OS of the core module 1. The outer side surface OS of the core module 1 may be arranged in an arched shape towards the outside. In other words, the outer side surface OS1 of the housing 11 and the outer surface OS2 of the decorative cover 12 may be arranged in an outward arch shape, which can increase the lateral space utilization rate of the earphone 100, so that the earphone 100 enables other components to be arranged inside the housing component 10, and the outward arch shape can visually make the core module 1 miniaturized on the outer side surface OS.

In some embodiments, as shown in FIG. 11, the first direction X and the second direction Y of the housing component 10 are also the first direction X and the second direction Y of the housing 11. The housing 11 may have a length direction X, a width direction Z, and a thickness direction Y, which are perpendicular to each other. The housing 11 may be configured to be stacked on the ear of the user along the thickness direction Y in the wearing state. Specifically, the length direction X of the housing 11 is as shown by an arrow X in FIG. 11, the thickness direction Y of the housing 11 is as shown by an arrow Y in FIG. 11, and the width direction Z of the housing 11 is shown by an arrow Z in FIG. 11, and the direction X, the direction Y, and the direction Z are perpendicular to each other.

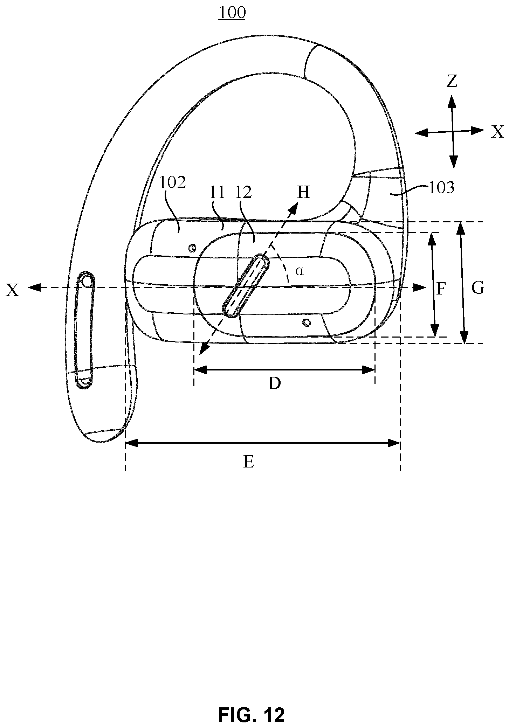

In some embodiments, as shown in FIG. 12, a ratio of a size of the decorative cover 12 to a size of the housing 11 in the length direction X is greater than or equal to 0.5 and less than or equal to 0.8. The size of the decorative cover 12 in the length direction X may be shown as a length D in FIG. 12, and the size of the housing 11 in the length direction X may be shown as a length E in FIG. 12, where 0.5≤D/E≤0.8. For example, the ratio of the size of the decorative cover 12 to the size of the housing 11 in the length direction X is 0.6, 0.7, etc. Preferably, the ratio of the size of the decorative cover 12 to the size of the housing 11 in the length direction X is greater than or equal to 0.6 and less than or equal to 0.7.

Optionally, the ratio of the size of the decorative cover 12 to the size of the housing 11 in the width direction Z is greater than or equal to 0.6 and less than or equal to 0.95. The size of the decorative cover 12 in the width direction Z may be shown as a length F in FIG. 12, and the size of the housing 11 in the width direction Z may be shown as a length G in FIG. 12, where 0.6≤F/G≤0.95. For example, the ratio of the size of the decorative cover 12 to the size of the housing 11 in the width direction Z is 0.65, 0.75, etc. Optionally, the ratio of the size of the decorative cover 12 to the size of the housing 11 in the width direction Z is greater than or equal to 0.7 and less than or equal to 0.87.

By setting the ratio of the size of the decorative cover 12 to the size of the housing 11 in this way, the decorative cover 12 can occupy a relatively large proportion of the outer side surface OS1 of the housing 11, so that the user can easily touch the decorative cover 12 when touching the outer side surface OS1 of the housing 11.

In some embodiments, the ratio of the size of the decorative cover 12 to the size of the housing 11 is expressed as other ratios. For example, the ratio of the size of the decorative cover 12 to the size of the housing 11 in the length direction X is greater than or equal to 0.3 and less than or equal to 0.8, the ratio of the size of the decorative cover 12 to the size of the housing 11 in the width direction Z is greater than or equal to 0.4 and less than or equal to 0.9, which is not described in detail in this embodiment.

In some embodiments, as shown in FIG. 12, the positioning protrusion 121 is arranged in a strip shape, and an extension direction H of the positioning protrusion 121 intersects with both the length direction X and the width direction Z. The extension direction H of the positioning protrusion 121 is as shown by an arrow H in FIG. 12. In this way, the positioning protrusion of which the extension direction intersects with the length direction X and the width direction Z provides the user with an obvious sense of touch when the hand of the user touches, thereby facilitating touch positioning of the user and providing the user with more obvious secondary touch navigation positioning.

Optionally, the extension direction H of the positioning protrusion 121 is not parallel to the length direction X and the width direction Z of the housing 11, and intersects with the length direction X of the housing 11 to form an acute angle. An angle α between the extension direction H of the positioning protrusion 121 and the length direction X of the housing 11 is shown in FIG. 12.

Optionally, the angle between the extension direction H of the positioning protrusion 121 and the length direction X of the housing 11 is in a range of 30°-70°. For example, the angle between the extension direction H of the positioning protrusion 121 and the length direction X of the housing 11 may be 40°, 50°, 60°, etc. In this way, the positioning protrusion 121 can be easily touched and identified by the user.

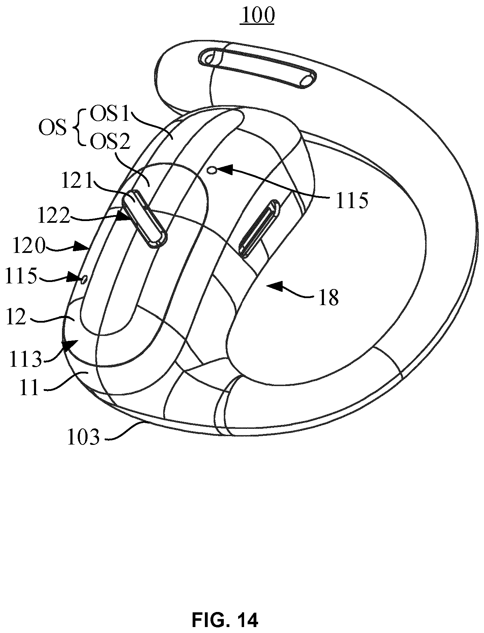

In some embodiments, as shown in FIG. 12 and FIG. 14, the housing 11 has the connection end 103 (also referred to as the second end 103 in some descriptions herein) connected with the ear hook 2 and the free end 102 (also referred to as the first end 102 in some descriptions herein) away from the connection end 103 in the length direction X. The housing 11 may be bent in the thickness direction Y toward a direction of the outer side surface OS1 of the housing 11, so that the free end 102 is closer to the earhole of the ear of the user than the connection end 103, and the decorative cover 12 is closer to the connection end 103. Since the free end 102 is closer to the ear and the connection end 103 connected with the ear hook 2 is farther away from the ear when the earphone 100 is worn on the ear, the decorative cover 12 is disposed closer to the connection end 103, so that the user can touch the decorative cover 12 conveniently.

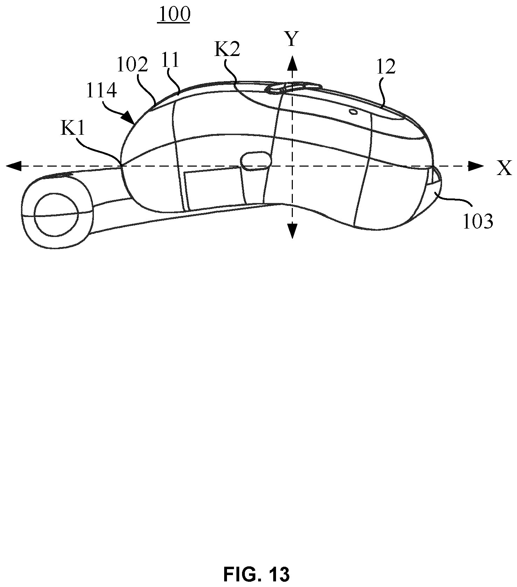

In some embodiments, as shown in FIG. 13 and FIG. 14, the housing 11 is bent in the thickness direction Y in the direction of the outer side surface OS1 of the housing 11, so that the free end 102 is closer to the earhole of the ear of the user than the connection end 103. In this way, the decorative cover 12 can be located as much as possible in a region parallel to a sagittal plane of a human body when the earphone 100 is in the wearing state, and a region of a bent surface of the decorative cover 12 extending toward the earhole is reduced, so that the user can operate blindly and quickly locate the positioning protrusion 121.

In some embodiments, as shown in FIG. 13, the free end 102 has a first reference position K1 farthest from the connection end 103 in the length direction X, and the decorative cover 12 has a second reference position K2 closest to the first reference position K1 in the length direction X. The free end 102 may at least partially extend into the cavum concha 502 in the wearing state.

The housing 11 may have an arc-shaped transition region 114 between the first reference position K1 and the second reference position K2. From the second reference position K2 to the first reference position K1, the arc-shaped transition region 114 gradually approaches the ear of the user along the thickness direction Y in the wearing state. Accordingly, when the earphone 100 is in the wearing state, a portion of the earphone 100 corresponding to the arc-shaped transition region 114 can gradually approach the ear of the user along the thickness direction Y or even fit the ear of the user, so that the free end 102 can better extend into the cavum concha 502, and the wearing comfort and stability of the earphone 100 can be improved. Moreover, the arc-shaped transition region 114 starts from the second reference point position K2 of the decorative cover 12, and gradually tilts toward the first reference position K1 in an arc shape, so that the second reference position K2 can be used as a turning point, the user can more effectively locate the decorative cover 12, and then locate the touch positioning region 120, thereby improving the convenience of touch. In addition, the edge of the decorative cover 12 is close to a demarcation point of a curve turning of the housing 11, so that the user can more easily identify and locate the decorative cover 12 when operating blindly.

In some embodiments, a roughness of the outer surface OS2 of the decorative cover 12 is greater than a roughness of the outer side surface OS1 of the housing 11. In this way, when the user touches the decorative cover 12 and the outer side surface OS1 of the housing 11, the difference in the roughness can bring a difference in tactile sensation to the user, and the decorative cover 12 and the housing 11 can be easily distinguished, thereby facilitating the user to locate the touch detection region 182 for touch control, and improving the convenience of touch control.

In some embodiments, the color of the outer surface OS2 of the decorative cover 12 is different from the color of the outer side surface OS1 of the housing 11. For example, the color of the outer surface OS2 of the decorative cover 12 is red, blue, etc., and the color of the outer side surface OS1 of the housing 11 is white, black, etc., so that the user can distinguish the decorative cover 12 from the housing 11 in appearance. By setting the color of the outer surface OS2 of the decorative cover 12 to be different from the color of the outer side surface OS1 of the housing 11, a color difference can be formed on the outer side surface OS of the core module 1, thereby visually making the size of the entire core module 1 smaller, and improving the visual effect of the earphone 100 by visual miniaturization. In addition, the color difference of the decorative cover 12 enables the touch detection region 182 to be clearly located, so that the user can easily know the position of the touch detection region 182, thereby reducing the learning cost and improving the efficiency of touch control.

In some embodiments, the material of the decorative cover 12 is different from the material of the housing 11. For example, the material of the decorative cover 12 is a transparent acrylic plate, and the material of the housing 11 is a metallic material. Alternatively, the material of the decorative cover 12 is a metallic material, and the material of the housing 11 is made of materials such as plastic and resin. The setting that the material of the decorative cover 12 is different from the material of the housing 11 facilitates the user to distinguish the decorative cover 12 from the housing 11, the difference in material can more easily improve the decorative effect of the decorative cover 12, and the difference in material can bring differentiated touch textures to the user, thereby facilitating the touch operation for the user and improving the convenience of touch control.

In some embodiments, as shown in FIG. 14, at least a portion of the edge of the decorative cover 12 is exposed out of the outer side surface OS1 of the housing 11 to enclose the touch positioning region 120. The touch positioning region 120 may be enclosed by at least the portion of the edge of the decorative cover 12 exposed out of the outer side surface OS1 of the housing 11. When the user touches the outer side surface OS1 of the housing 11, the user may touch at least the portion of the edge of the decorative cover 12. Since the edge provides a tactile sensation to the user, the user can clearly know that the user touches the corresponding region, thereby effectively achieving navigation positioning.

Optionally, the edge of the decorative cover 12 is arranged in a ring shape and completely exposed out of the outer side surface OS1 of the housing 11 to enclose the touch positioning region 120. The edge of the decorative cover 12 may surround the positioning protrusion 121. In other words, the edge of the decorative cover 12 is completely exposed out of the outer side surface OS1 of the housing 11, and the user can touch the complete edge of the decorative cover 12, which has a better positioning effect and further improves the efficiency of touch control for the user. In addition, the positioning protrusion 121 is arranged in a middle position of the decorative cover 12 and is not close to the edge of the decorative cover 12. In this way, the position of the positioning protrusion 121 is more stable and is not easy to fall from the touch positioning region 120 enclosed by the decorative cover 12.

In some embodiments, as shown in FIG. 14, the outer side surface of the housing 11 is provided with a positioning groove 113, and the decorative cover 12 is accommodated in the positioning groove 113 through a notch of the positioning groove 113.

Optionally, shapes and sizes of the positioning groove 113 and the decorative cover 12 match each other, so as to facilitate the assembly of the decorative cover 12 into the positioning groove 113 of the housing 11 and make a joint seam between the positioning groove 113 and the decorative cover 12 more uniform, providing a more delicate and soft tactile feeling.

Optionally, the joint seam between the edge of the decorative cover 12 and an edge of the notch of the positioning groove 113 is exposed out of the outer side surface, and the joint seam surrounds the positioning protrusion 121. The joint seam is formed between the edge of the decorative cover 12 and the edge of the positioning groove 113, so that a tactile feeling that is clearly different from other positions can be provided. When the user touches the joint seam, the user can quickly and effectively know that the user touches the corresponding region, thereby improving the efficiency of touch control for the user.

In some embodiments, the positioning protrusion 121 protrudes from the outer side surface OS1 of the housing 11, the decorative cover 12 is provided with a positioning hole 122, and the positioning protrusion 121 penetrates through the positioning hole 122. With the positioning hole 122 and the positioning protrusion 121, the decorative cover 12 and the outer side surface OS1 of the housing 11 can be accurately assembled, so that the position of the touch detection region 182 can be more accurate. Furthermore, with the cooperation of the positioning groove 113 and the positioning protrusion 121, the assembly accuracy between the decorative cover 12 and the housing 11 can be further enhanced, and the touch positioning region 120 can provide more accurate positioning for the touch detection region 182, thereby improving the accuracy and convenience of touch control.

Optionally, the positioning protrusion 121 protrudes from the outer surface OS2 of the decorative cover 12 and is integrated with the decorative cover 12, which makes the positioning protrusion 121 more stable and less likely to detach from the decorative cover 12. In addition, the position between the positioning protrusion 121 and the touch positioning region 120 is relatively fixed, which can provide the user with accurate primary touch navigation positioning and secondary touch navigation positioning.

Optionally, at least two sound pickup holes 115 are provided on the outer side surface OS of the core module 1. The at least two sound pickup holes 115 may be respectively located on two opposite slopes of the outer side surface OS of the core module 1. By arranging the at least two sound pickup holes 115 on the two opposite slopes, the at least two sound pickup holes 115 point to different directions, expanding a sound pickup range of the earphone 100, and pointing to different directions can reduce the mutual interference between the at least two sound pickup holes 115.

In some embodiments, the positioning protrusion 121 is arranged in a strip shape, and the at least two sound pickup holes 115 are respectively located on two sides of the positioning protrusion 121. In this way, the at least two sound pickup holes 115 are arranged on the two sides of the positioning protrusion 121, thereby reducing the mutual interference between the at least two sound pickup holes 115.

A positional relationship between the touch detection region 182 and the positioning protrusion 121 may be in various modes.

Mode 1: optionally, the touch detection region 182 surrounds the positioning protrusion 121, so that the user can accurately locate and confirm the position of the touch detection region 182 by touching the positioning protrusion 121, and the user can quickly and accurately locate the position of the touch detection region 182 when using the earphone 100, thereby optimizing the user experience.

Mode 2: the touch detection region 182 may be closer to the connection end 103 relative to the positioning protrusion 121 to facilitate the user to sense and trigger the touch detection region 182. Alternatively, the touch detection region 182 may surround the positioning protrusion 121, so that the user can accurately locate the touch detection region 182 through the positioning protrusion 121 and trigger the touch module 18.

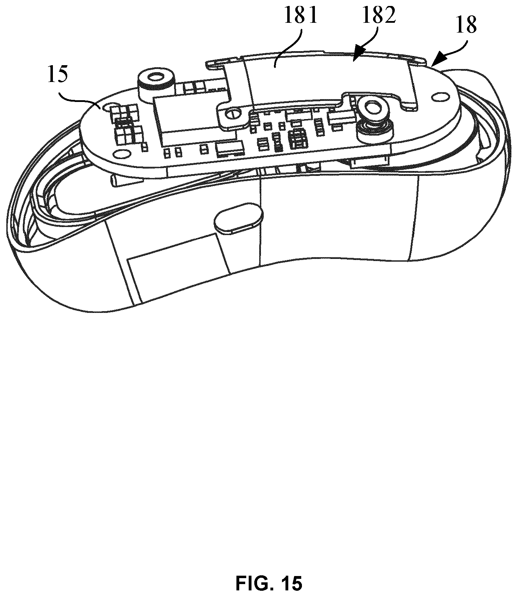

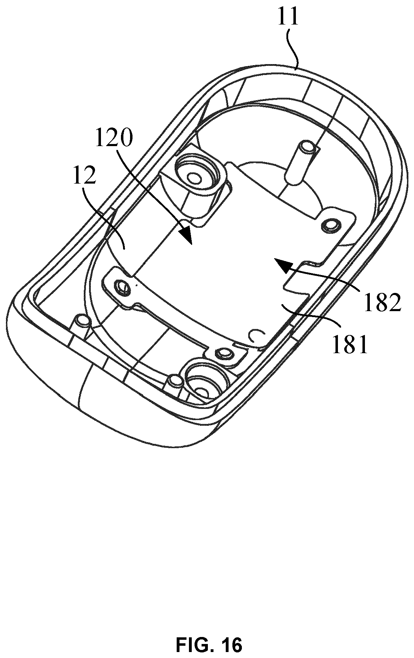

In some embodiments, as shown in FIG. 15-FIG. 16, the touch module 18 includes a touch metal pattern 181 and a circuit board 15. The circuit board 15 may be disposed inside the housing 11. The touch metal pattern 181 may be disposed inside the housing 11 or disposed between the decorative cover 12 and the housing 11. The touch metal pattern 181 may be electrically connected with the circuit board 15. The touch metal pattern 181 may be configured to form the touch detection region 182.

When the user touches and/or presses the touch positioning region 120 or the positioning protrusion 121, it can trigger to form the touch metal pattern 181 of the touch detection region 182. The touch metal pattern 181 can generate a corresponding signal and transmit the corresponding signal to the circuit board 15 to further trigger a response of another function.

In some embodiments, the touch metal pattern 181 is configured as a radio frequency antenna of the earphone 100. The earphone 100 may receive and transmit a radio frequency (RF) signal through the touch metal pattern 181, so that the functions of the earphone 100 can be expanded and enriched, and the earphone 100 can perform information interaction with other devices.

At least one sound pickup hole 115 may be provided. The at least one sound pickup hole 115 may at least penetrate through the housing 11 to connect an external environment and the accommodation space 101. Accordingly, the core module 1 may include a microphone 19. The microphone 19 may be disposed in the accommodation space 101 and arranged corresponding to the at least one sound pickup hole 115, so as to pick up sound of the external environment through the at least one sound pickup hole 115.

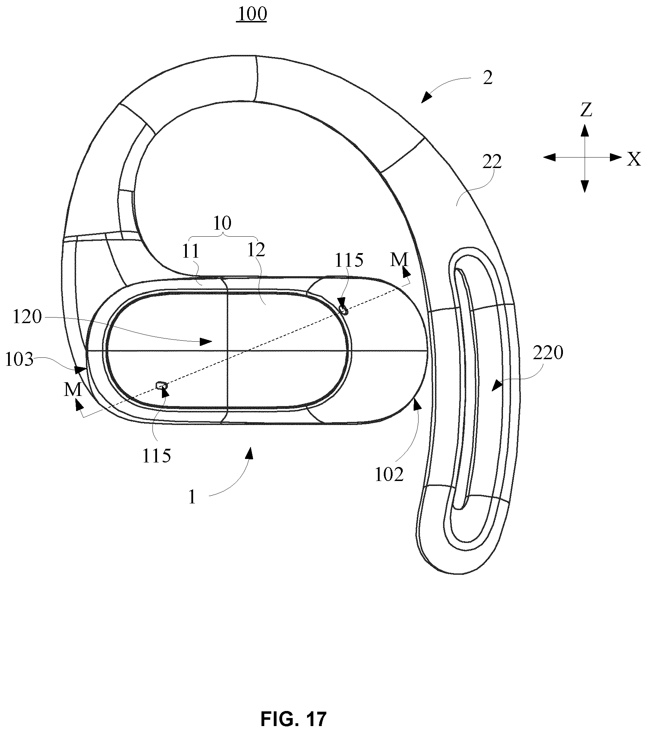

Optionally, as shown in FIG. 17-FIG. 20, the core module 1 is provided with at least two sound pickup holes 115 connecting the accommodation space 101 and the external environment. The core module 1 may include at least two microphones 19. The at least two microphones 19 may be arranged at intervals in the accommodation space 101, which correspond one by one with the at least two sound pickup holes 115. Taking two microphones 19 as an example, one of the sound pickup holes 115 penetrates through the housing 11 to be located on a periphery of the decorative cover 12, and the other of the sound pickup holes 115 penetrates through the housing 11 and the decorative cover 12, i.e., this sound pickup hole 115 is located within a range enclosed by the edge of the decorative cover 12. Accordingly, two microphones 19 may be provided in the accommodation space 101, which correspond one by one with the two sound pickup holes 115.

By providing the at least two sound pickup holes 115, the sound pickup range can be expanded and the quality of sound pickup can be improved. Moreover, one of the at least two sound pickup holes 115 is provided on the decorative cover 12 and the other of the at least two sound pickup holes 115 is provided outside of the decorative cover 12, which can reduce the probability of blocking the at least two sound pickup holes 115 when touching the decorative cover 12, thereby reducing the impact on the sound pickup effect.

Optionally, taking two sound pickup holes 115 as an example, a distance between the two sound pickup holes 115 is greater than or equal to a size of the decorative cover 12 along an arrangement direction of the two microphones 19. Since one of the two sound pickup holes 115 is arranged outside the decorative cover 12, so that the other of the two sound pickup holes 115 can be set at the edge of the decorative cover 12 as much as possible, so that the distance between the two sound pickup holes 115 is relatively large, and when the touch positioning region 120 of the decorative cover 12 is touched, it is not easy to block the sound pickup hole 115 located outside the decorative cover 12, nor is it easy to block the sound pickup hole 115 close to the edge of the decorative cover 12, thereby further reducing the probability of blocking the two sound pickup holes 115 when touching the decorative cover 12, and reducing the impact on the sound pickup effect.

Optionally, as shown in FIG. 17, the touch positioning region 120 is located between the two sound pickup holes 115. In this way, it is not easy to block the two sound pickup holes 115 when touching the touch positioning region 120, thereby reducing the impact on the sound pickup effect.

Optionally, the arrangement direction of the two sound pickup holes 115 intersects with the length direction X and the width direction Z of the housing 11. The sound pickup hole 115 (i.e., the sound pickup hole 115 located within the edge of the decorative cover 12) that penetrates through the decorative cover 12 may be closer to the connection end 103 and closer to the edge of the decorative cover 12 away from the ear hook 2 in the width direction Z relative to the sound pickup hole 115 located outside the decorative cover 12. The sound pickup hole 115 is arranged at the "lower left", so that the sound pickup hole 115 that penetrates through the decorative cover 12 is closer to the mouth of the user and the loudspeaker 13 to clearly pick up the sound of the speech of the user and the sound of the loudspeaker 13, which is convenient for noise reduction and improves the quality of sound pickup of the external environment. In addition, the sound pickup hole 115 is closer to the edge of the decorative cover 12 away from the ear hook 2 in the width direction Z, which can reduce the probability of blocking the sound pickup hole 115 when touching the decorative cover 12.

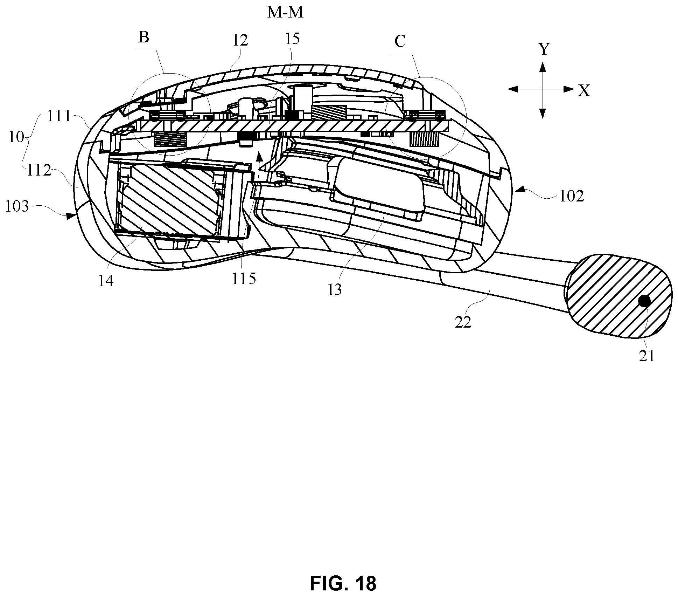

Optionally, as shown in FIG. 18-FIG. 20, the core module 1 further includes a sealing component 190. At least a portion of the sealing component 190 is disposed between the housing 11 and the microphone 19 for isolating a sound pickup passage from the accommodation space 101, so that the sound pickup passage is sealed relative to a portion of a space outside the sound pickup passage of the accommodation space 101, thereby reducing the influence of dust, water vapor, or the like, that enter the sound pickup passage through the sound pickup holes 115 on other electrical components in the accommodation space 101.

Optionally, the core module 1 further includes a fixing plate configured to fix the microphone 19. Optionally, the fixing plate is the circuit board 15. In some embodiments, the fixing plate is a plate structural member other than the circuit board 15, or a portion of the housing component 10, which is configured to fix the microphone 19 and other components.

As shown in FIG. 18-FIG. 20, the fixing plate is accommodated in the accommodation space 101 and is provided with a through hole 151, and the microphone 19 is fixed to one side of the fixing plate and covers the through hole 151. At least a portion of the sealing component 190 is disposed in the accommodation space 101 and abuts between the housing 11 and a side of the fixing plate away from the microphone 19, and enables the through hole 151 and the sound pickup holes 115 to be connected with each other, so that the mounting stability and sealing performance of the sealing component 190 can be improved.

There are various matching structures formed by the sealing component 190 and the housing 11, etc., used for microphones 19 with different mounting structures or different positions.

In some embodiments, for the sound pickup hole 115 that penetrates the housing 11 and is located at the periphery of the decorative cover 12, the structure of the sealing component 190 and the related description examples are as follows.

As shown in FIG. 18-FIG. 19, the microphone 19 penetrates through the housing 11 and is located at the periphery of the decorative cover 12. The sealing component 190 may include a sealing rubber ring 191a and a gauze assembly 192a. The sealing rubber ring 191a and the gauze assembly 192a may be stacked, and the sealing rubber ring 191a and the gauze assembly 192a may be disposed in the accommodation space 101 and located between the fixing plate and the housing 11. Since the microphone 19 is located on the periphery of the decorative cover 12 and penetrates through the housing 11, in this case, the integrity and unity of the housing 11 here are good, by stacking the sealing rubber ring 191a and the gauze assembly 192a and placing them between the fixed plate and the housing 11, on the one hand, the sealing effect can be better achieved based on the housing 11 with good integrity, on the other hand, the sealing rubber ring 191a and the gauze assembly 192a being stacked can achieve a thicker sealing component 190, which can be more tightly sealed between the housing 11 and the fixed plate. The gauze assembly 192a can reduce the entry of dust, impurities, or the like, into the accommodation space 101, thereby further improving the sealing effect.

Optionally, the sealing rubber ring 191a is stacked on the fixing plate and is closer to the through hole 151 relative to the gauze assembly 192a. The gauze assembly 192a may be located between the sealing rubber ring 191a and the housing 11 and closer to the sound pickup hole 115 relative to the sealing rubber ring 191a. In this way, placing the gauze assembly 192a in front of the sealing rubber ring 191a (i.e., closer to the sound pickup hole 115) can reduce the accumulation of dust, impurities, or the like, on the sealing rubber ring 191a, thereby preventing dust, impurities, water vapor, or the like, from entering the accommodation space 101 as early as possible.

In some embodiments, for the sound pickup hole 115 that penetrates through the housing 11 and the decorative cover 12, the structure of the sealing component 190 and the related descriptions of examples are as follows.

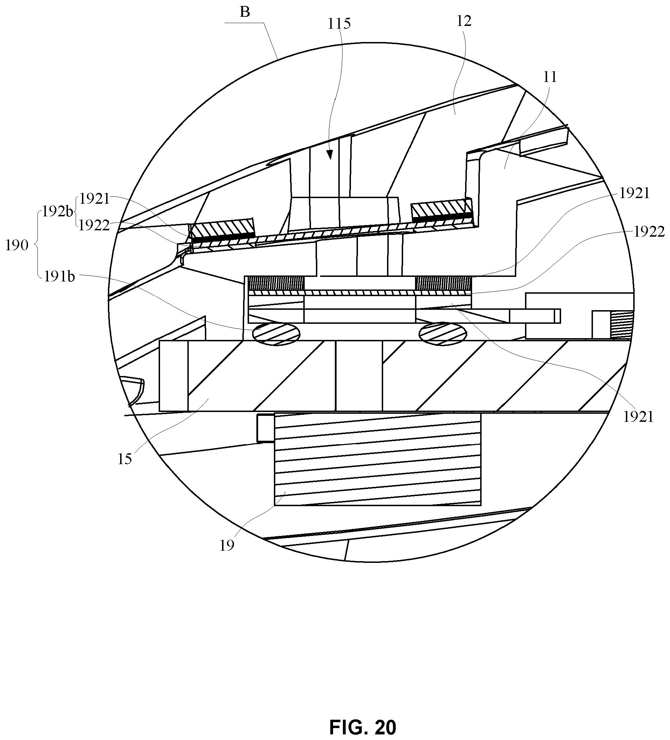

As shown in FIG. 20, the microphone 19 penetrates through the housing 11 and the decorative cover 12, and the sealing component 190 includes a sealing rubber ring 191b and at least one gauze assembly 192b. The sealing rubber ring 191b may be disposed in the accommodation space 101 and located between the housing 11 and the fixing plate, and directly abut against the housing 11 and the fixing plate. The at least one gauze assembly 192b may be disposed between the housing 11 and the decorative cover 12. Since, the cooperation between the decorative cover 12 and the housing 11 and the cooperation between the sealing component 190 and the fixing plate are prone to accumulate relatively large errors, connecting the sealing rubber ring 191b with stronger deformation ability to the fixing plate can reduce the matching error between the decorative cover 12 and the housing 11 and the matching error between the sealing component 190 and the fixing plate, thereby ensuring the sealing effect of circuit accessories.

Optionally, two gauze assemblies 192b are provided, one of the two gauze assemblies192b is arranged between the housing 11 and the decorative cover 12, and the other of the two gauze assemblies 192b and the sealing rubber ring 191b are stacked in the accommodation space 101 and located between the housing 11 and the fixing plate.

By arranging the gauze assembly 192b between the housing 11 and the decorative cover 12, on the one hand, it is possible to reduce dust, impurities, water vapor, or the like, from entering the accommodation space 101 as early as possible, and on the other hand, the gauze assembly 192b can seal the sound pickup hole 115 between the housing 11 and the decorative cover 12, preventing affecting the connection stability between the housing 11 and the decorative cover 12 by reducing water vapor from entering between the housing 11 and the decorative cover 12 from the sound pickup hole. By arranging the sealing rubber ring 191b in the accommodation space 101 and sealing between the housing 11 and the fixing plate, the sealing effect is further improved, reducing the water vapor entering from the sound pickup hole 115 from leaking into the accommodation space 101 and causing adverse effects on other electrical devices inside.

The structures of the gauze assemblies 192a and 192b are described exemplarily as follows.

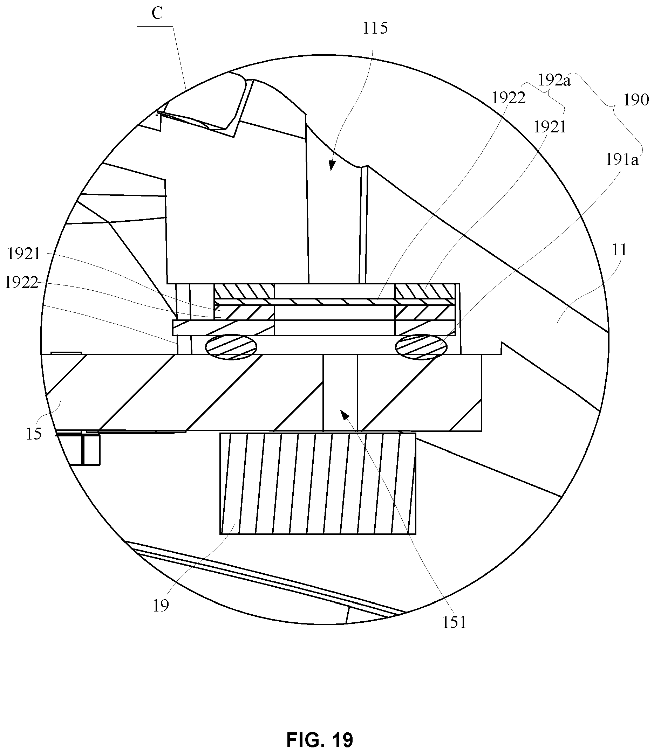

As shown in FIG. 19 and FIG. 20, the gauze assemblies 192a and 192b include an annular double-sided adhesive tape 1921 and a gauze mesh 1922. The annular double-sided adhesive tape 1921 may be stacked with the gauze mesh 1922 and adhere to the gauze mesh 1922. Specifically, one side of the annular double-sided adhesive tape 1921 adheres to the gauze mesh 1922, and the other side of the annular double-sided adhesive tape 1921 is connected with the housing 11 or the decorative cover 12 close to the annular double-sided adhesive tape 1921. For example, for the sound pickup hole 115 that penetrates through the housing 11 and the decorative cover 12, one side of the annular double-sided adhesive tape 1921 adheres to the gauze mesh 1922, and the other side of the annular double-sided adhesive tape 1921 adheres to the housing 11. For the sound pickup hole 115 that penetrates through the housing 11 and is located on the periphery of the decorative cover 12, one side of the annular double-sided adhesive tape 1921 may adhere to the gauze mesh 1922, and the other side of the annular double-sided adhesive tape 1921 may adhere to the housing 11. The gauze mesh 1922 may be arranged opposite to the sound pickup hole 115 and the through hole 151 to effectively reduce impurities, dust, or the like, from entering the accommodation space 101. Specifically, the annular double-sided adhesive tape 1921 surrounds the periphery of the sound pickup hole 115, and a portion of the gauze mesh 1922 located in the middle of the annular double-sided adhesive tape 1921 is arranged opposite to the sound pickup hole 115.

Optionally, two annular double-sided adhesive tapes 1921 are provided, one gauze mesh 1922 is provided, and the gauze mesh 1922 is stacked and bonded between the two annular double-sided adhesive tapes 1921. By providing the two annular double-sided adhesive tapes 1921, the bonding strength of the gauze mesh 1922 can be enhanced, the gauze mesh 1922 can be better fixed, and the thickness can be increased so as to be more tightly sealed between the housing 11 and the decorative cover 12, or between the housing 11 and the sealing rubber rings 191a and 191b, thereby improving the sealing effect.

Optionally, two annular double-sided adhesive tapes 1921 are provided, and two gauze meshes 1922 are provided. The two annular double-sided adhesive tapes 1921 are arranged at intervals, one of the two gauze meshes 1922 is stacked and bonded between the two annular double-sided adhesive tapes 1921, and one of the two annular double-sided adhesive tapes 1921 is stacked between the two gauze meshes 1922. By providing the two gauze meshes 1922, the filtering and blocking effects can be further enhanced, the two annular double-sided adhesive tapes 1921 can effectively fix the two gauze meshes 1922, and the thickness can be further increased so as to be more tightly sealed between the housing 11 and the decorative cover 12, or between the housing 11 and the sealing rubber rings 191a and191 b, thereby improving the sealing effect.

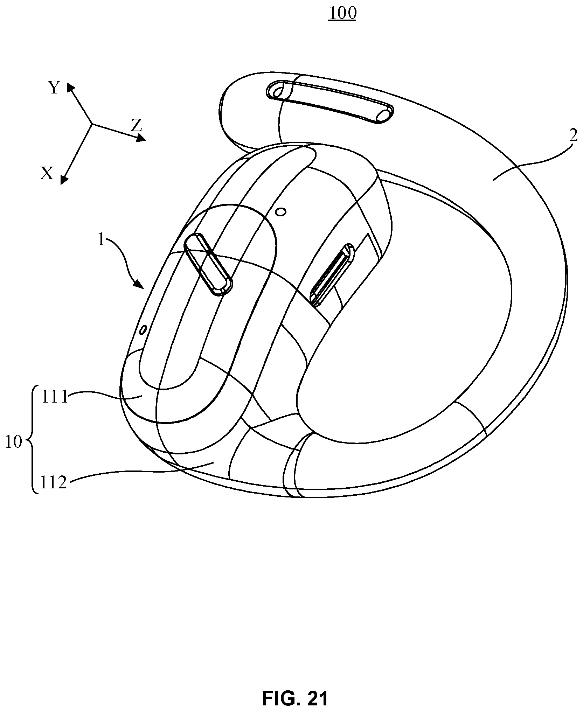

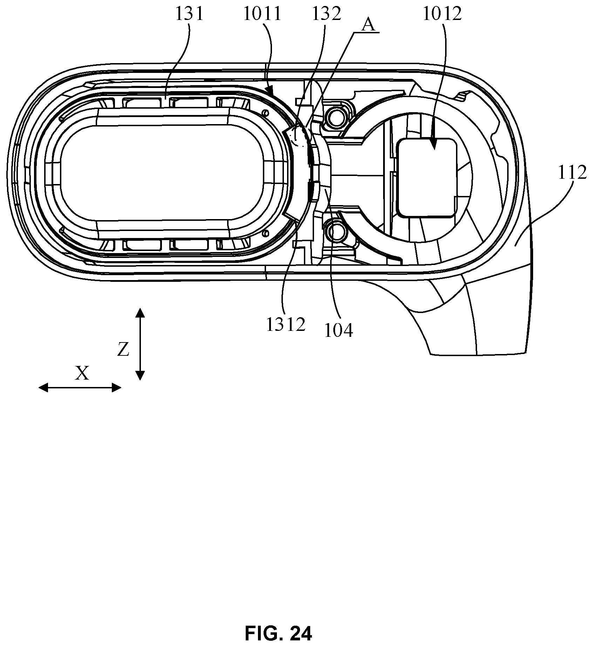

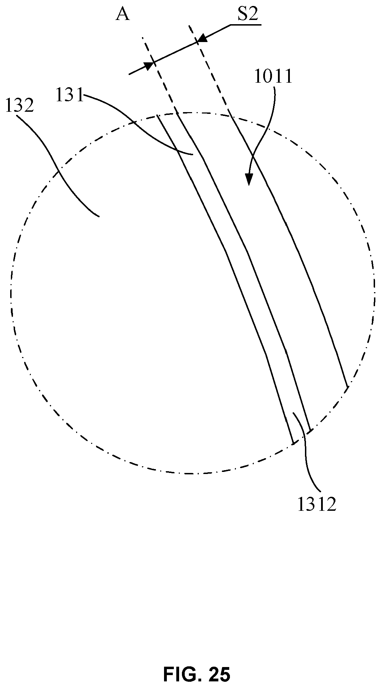

Referring to FIG. 21-FIG. 23, as described above, the earphone 100 may include the housing component 10 and the loudspeaker 13. Optionally, the earphone 100 further includes a sealant (not shown in the figures). The housing component 10 may be configured to form a first accommodation cavity 1011. The loudspeaker 13 may include a bracket 131 and a metal solder pad 132. Referring to FIG. 24 and FIG. 25, the bracket 131 is disposed in the first accommodation cavity 1011, and the metal solder pad 132 is disposed on the bracket 131 and faces the side of the battery 14 to ensure that the loudspeaker 13 is electrically connected with other components. The sealant is configured to seal a gap between an outer peripheral wall of the bracket 131 and an inner peripheral wall of the first accommodation cavity 1011.

By setting the sealant to seal the gap between the outer peripheral wall of the bracket 131 and the inner peripheral wall of the first accommodation cavity 1011, the loudspeaker 13 and the housing can be sealed, thereby improving the sealing of the housing component 10 and reducing the risk of water damage to the electronic components.

In the process of dispensing the sealant, it often needs to dispense the sealant around the bracket 131 to make the sealant continuously fill between the outer peripheral wall of the bracket 131 and the inner peripheral wall of the first accommodation cavity 1011, thereby achieving a stable and reliable sealing effect between the outer peripheral wall of the bracket 131 and the inner peripheral wall of the first accommodation cavity 1011. In the prior art, the metal solder pad 132 is often configured to extend from the bracket 131 to the outside of the inner peripheral wall of the first accommodation cavity 1011 to connect a power supply outside the first accommodation cavity 1011, and in the process of dispensing the sealant, the solder pad forms a large shielding on the gap between the outer peripheral wall of the bracket 131 and the inner peripheral wall of the first accommodation cavity 1011, which is not convenient for dispensing the sealant near the solder pad, causes a risk of interruption of the sealant at the solder pad, and reduces the sealing reliability.

By setting the metal solder pad 132 to be located on the side of the inner peripheral wall of the first accommodation cavity 1011 facing the battery 14, and setting the metal solder pad 132 to maintain a certain distance from the inner peripheral wall of the first accommodation cavity 1011, the gap between the outer peripheral wall of the bracket 131 and the inner peripheral wall of the first accommodation cavity 1011 can be exposed to the outside at the solder pad during the process of dispensing the sealant, thereby facilitating dispensing at the solder pad and facilitating continuous filling of the sealant between the outer peripheral wall of the bracket 131 and the inner peripheral wall of the first accommodation cavity 1011, and achieving a stable and reliable sealing effect.

Furthermore, a wire 133 is capable of extending from the metal solder pad 132 to the inner peripheral wall of the first accommodation cavity 1011. The diameter of the wire 133 is much less than the size of the metal solder pad 132. The wire 133 less blocks the gap between the outer peripheral wall of the bracket 131 and the inner peripheral wall of the first accommodation cavity 1011, which is conducive to dispensing and achieving a stable and reliable sealing effect.

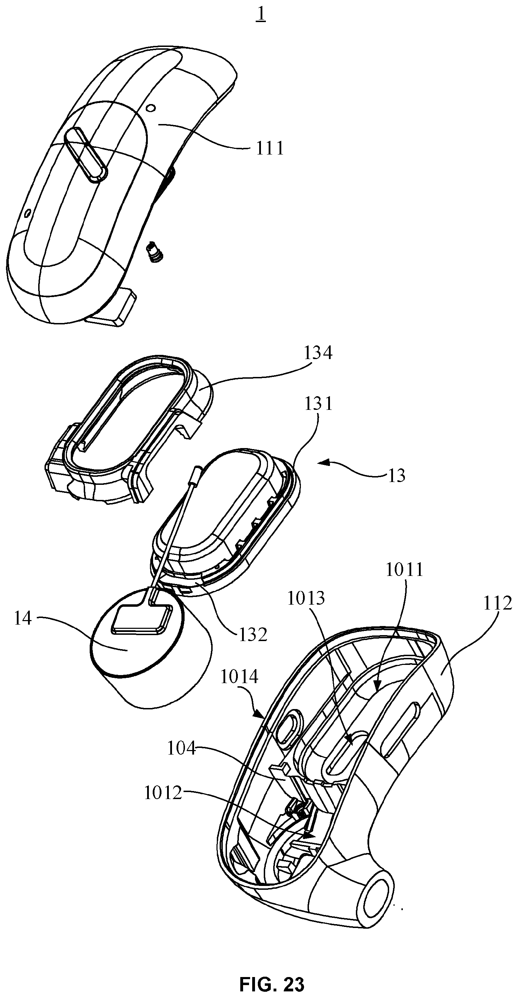

Referring to FIG. 23 to FIG. 25, in some embodiments, the metal solder pad 132 is configured not to extend beyond the outer peripheral wall of the bracket 131.

In this way, during the process of dispensing the sealant, the metal solder pad 132 does not block the gap between the outer peripheral wall of the bracket 131 and the inner peripheral wall of the first accommodation cavity 1011, which facilitates the dispensing operation and helps to achieve a stable and reliable sealing effect.

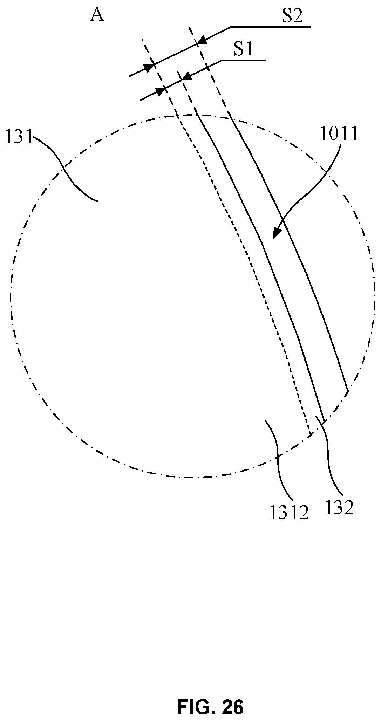

Referring to FIG. 23, FIG. 24, and FIG. 26, in some embodiments, the metal solder pad 132 is configured to extend beyond the outer peripheral wall of the bracket 131, and an extension distance S1 of the metal solder pad 132 relative to the outer peripheral wall of the bracket 131 is not greater than half of a size S2 of the gap between the outer peripheral wall of the bracket 131 and the inner peripheral wall of the first accommodation cavity 1011.

In this way, during the process of dispensing the sealant, the metal solder pad 132 does not completely block the gap between the outer peripheral wall of the bracket 131 and the inner peripheral wall of the first accommodation cavity 1011, and the dispensing operation can still be performed at the metal solder pad 132. By setting the extension distance S1 of the metal solder pad 132 relative to the outer peripheral wall of the bracket 131 not to be greater than half of the size S2 of the gap between the outer peripheral wall of the bracket 131 and the inner peripheral wall of the first accommodation cavity 1011, during the process of dispensing the sealant, the gap between the outer peripheral wall of the bracket 131 and the inner peripheral wall of the first accommodation cavity 1011 can be partially exposed to the outside at the solder pad. Since the sealant has a certain fluidity during dispensing, the sealant can fully fill between the outer peripheral wall of the bracket 131 and the inner peripheral wall of the first accommodation cavity 1011 based on the fluidity of the sealant, thereby achieving a stable and reliable sealing effect. For example, the extension distance S1 of the metal solder pad 132 relative to the outer peripheral wall of the bracket 131 is set to 0.2 to 0.3 times, or 0.4 to 0.5 times the size S2 of the gap between the outer peripheral wall of the bracket 131 and the inner peripheral wall of the first accommodation cavity 1011.

In some embodiments, referring to FIG. 23, FIG. 27, and FIG. 28, the first accommodation cavity 1011 has an open end 1014, the bracket 131 is placed in the first accommodation cavity 1011 from the open end 1014, the metal solder pad 132 is located on a side of the bracket 131 facing the open end 1014, the earphone 100 further includes the wire 133, and the wire is soldered to the side of the metal solder pad 132 facing the open end 1014.

During the assembly process of the bracket 131, a periphery side of the bracket 131 and a side of the bracket 131 away from the open end 1014 contact with an inner wall of the first accommodation cavity 1011. By setting the metal solder pad 132 on the side of the bracket 131 facing the open end 1014, and welding the wire 133 to the side of the metal solder pad 132 facing the open end 1014, the interference of the metal solder pad 132 and the wire 133 on the assembly process can be reduced, thereby improving the assembly efficiency.

Referring to FIG. 23 to FIG. 25, in some embodiments, the sealant is dispensed from one side of the open end 1014 to the gap between the outer peripheral wall of the bracket 131 and the inner peripheral wall of the first accommodation cavity 1011.

During the process of dispensing the sealant, the gap between the outer peripheral wall of the bracket 131 and the inner peripheral wall of the first accommodation cavity 1011 can be exposed to the outside through the open end 1014, so as to facilitate dispensing the sealant from the outside through the open end 1014 to the gap between the outer peripheral wall of the bracket 131 and the inner peripheral wall of the first accommodation cavity 1011, and make the sealant enter the gap between the outer peripheral wall of the bracket 131 and the inner peripheral wall of the first accommodation cavity 1011 from one side of the open end 1014. In this way, the dispensing operation is facilitated and the assembly efficiency is improved.

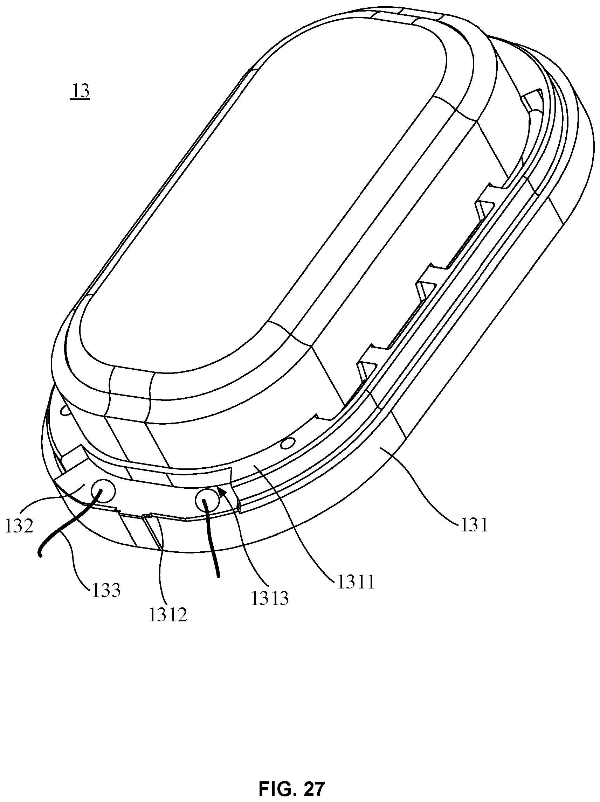

Referring to FIG. 27-FIG. 29, in some embodiments, the earphone 100 further includes a support 134. The bracket 131 is provided with an annular table 1311 facing the open end 1014 and an assembly table 1312. The annular table 1311 is arranged along a circumferential direction of the bracket 131 and is provided with a first notch 1313. The assembly table 1312 corresponds to the position of the first notch 1313 along the circumferential direction of the bracket 131. The metal solder pad 132 is disposed on the assembly table 1312, and the support 134 is supported on the annular table 1311.

The assembly table 1312 may sink relative to the annular table 1311 at the first notch 1313 in a direction away from the open end 1014. The metal solder pad 132 often has a certain protrusion height. By setting the annular table 1311 to have the first notch 1313, the support 134 can avoid the metal solder pad 132 and the wire 133 when supported on the annular table 1311, which facilitates the assembly of the support 134 and the bracket 131 and improves the assembly efficiency.

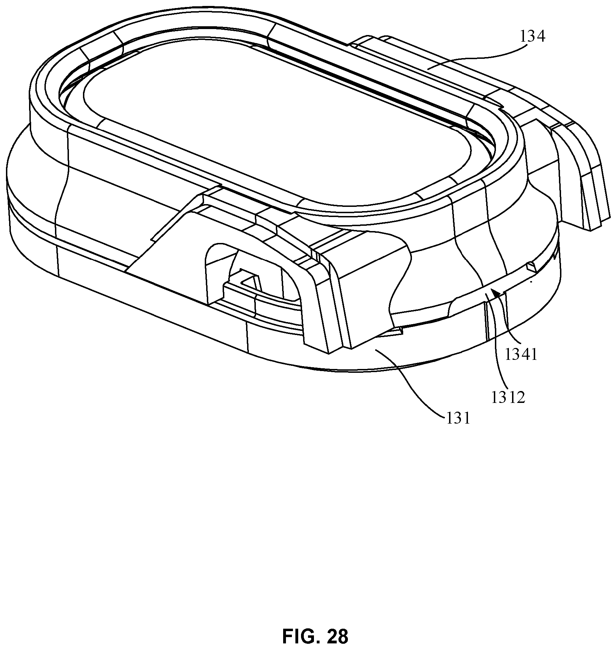

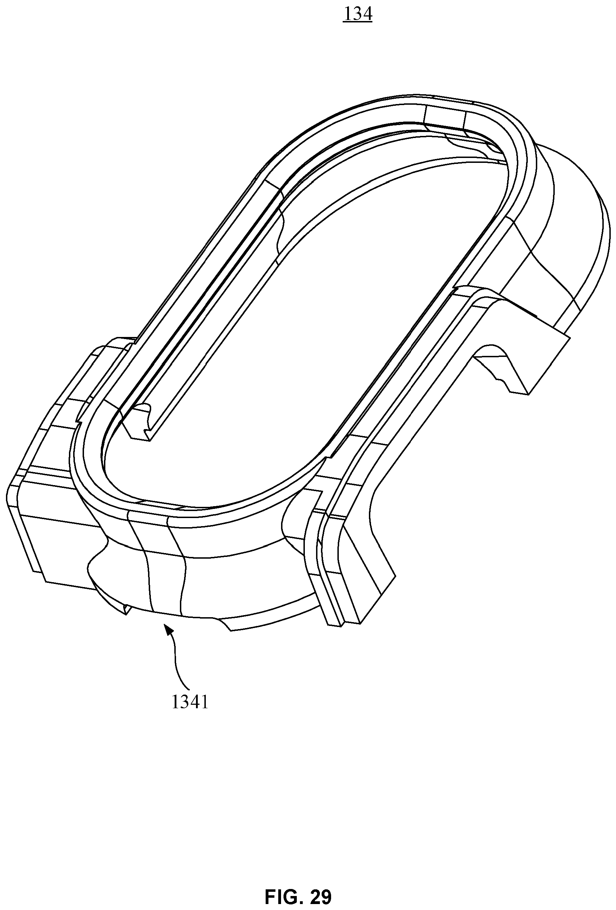

In some embodiments, referring to FIG. 28 and FIG. 29, a second notch 1341 is provided at one end of the support 134 facing the bracket 131, and the second notch 1341 corresponds to the position of the assembly table 1312 along the circumferential direction of the bracket 131.

By providing the second notch 1341, the support 134 can more easily avoid the metal solder pad 132 and the wire 133 when supported on the annular table 1311, thereby facilitating the assembly of the support 134 and the bracket 131 and improving the assembly efficiency.

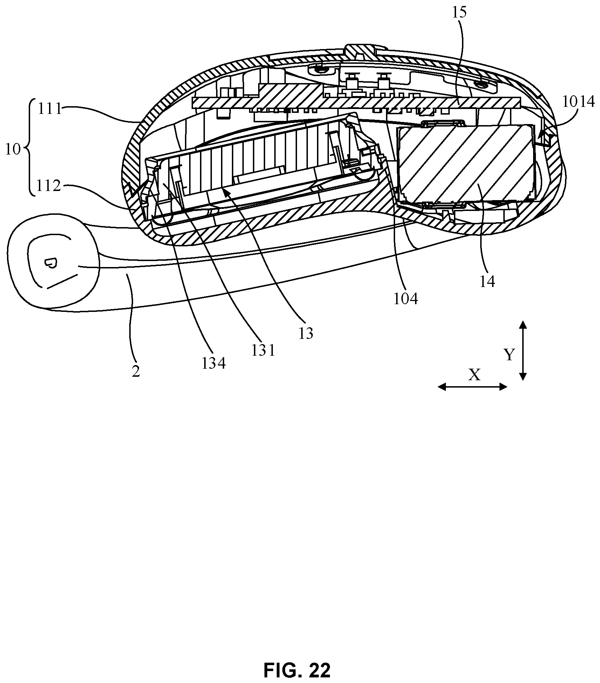

In some embodiments, referring to FIG. 22-FIG. 24, the housing component 10 further forms a second accommodation cavity 1012, the housing component 10 includes the partition wall 104 configured to separate the first accommodation cavity 1011 and the second accommodation cavity 1012, the earphone 100 further includes the battery 14, the battery 14 is disposed in the second accommodation cavity 1012, and the metal solder pad 132 is located on a side of the bracket 131 facing the partition wall 104.

A portion of the inner peripheral wall of the first accommodation cavity 1011 may be formed by the partition wall 104, and a portion of the sealant may seal a gap between the outer peripheral wall of the bracket 131 and the partition wall 104. By providing the partition wall 104, the risk of water flowing from a side of the loudspeaker 13 close to a sound outlet 1013 to the second accommodation cavity 1012 can be reduced.

The battery 14 may be used as a power source to supply power to the loudspeaker 13. The first accommodation cavity 1011 and the second accommodation cavity 1012 may be arranged adjacent to each other, which simplifies the connection line between the battery 14 and the loudspeaker 13. By arranging the metal solder pad 132 on the side of the bracket 131 facing the partition wall 104, a spacing distance between the battery 14 and the metal solder pad 132 can be reduced, which further simplifies the connection line between the battery 14 and the loudspeaker 13. Furthermore, the metal solder pad 132 is capable of being connected with the battery 14 through the wire 133, so that the battery 14 supplies power to the loudspeaker 13.

The above descriptions are only some embodiments of the present disclosure, and do not limit the protection scope of the present disclosure. Any equivalent device or equivalent process transformation made using the contents of the specification and drawings of the present disclosure, or directly or indirectly used in other related technical fields, are also included in the patent protection scope of the present disclosure.

## Claims

1. An earphone, comprising:
a housing component configured to form an accommodation space and having a first direction and a second direction orthogonal to the first direction, wherein the housing component further has a first end and a second end arranged opposite to each other along the first direction;
an ear hook connected with the housing component, wherein in a wearing state of the earphone, the ear hook is at least partially located at a rear side of an ear of a user, the housing component is located at a front side of the ear of the user along the second direction, and the first end of the housing component at least partially extends into a cavum concha of the ear of the user;
a loudspeaker disposed in the accommodation space and configured to provide sound to the ear of the user, wherein
in the wearing state of the earphone, an outer wall surface of the housing component facing the ear of the user is arranged in an arch shape away from the ear of the user in the first direction.

2. **The** earphone of claim 1, wherein in the first direction, the first end has a first reference point farthest from the second end, and a distance from an apex of the outer wall surface to the first reference point in the first direction is in a range of 14 mm-20 mm.

3. **The** earphone of claim 2, wherein in the second direction, the outer wall surface has a second reference point adjacent to the second end and closest to the ear of the user in the wearing state of the earphone, and a distance from the second reference point to the first reference point in the first direction is in a range of 20 mm-31 mm.

4. **The** earphone of claim 3, wherein the second reference point is configured to abut against a facial skin on a front side of a tragus of the ear of the user in the wearing state of the earphone.

5. **The** earphone of claim 3 or 4, wherein a distance from the apex of the outer wall surface to the second reference point in the second direction is in a range of 1.3 mm-2.2 mm.

6. The earphone of claim 2, wherein in the second direction, the outer wall surface has a third reference point adjacent to the first end and closest to the ear of the user in the wearing state of the earphone, and a distance from the third reference point to the first reference point in the first direction is in a range of 3 mm-5 mm.

7. The earphone of claim 6, wherein a distance from the apex of the outer wall surface to the third reference point in the second direction is in a range of 2 mm-3 mm.

8. **The** earphone of claim 1, further comprising a battery, wherein the loudspeaker and the battery are disposed at intervals in the accommodation space along the first direction.

9. **The** earphones of claim 8, wherein an inner wall surface of the housing component facing the ear of the user is provided with a partition wall adjacent to an apex of the outer wall surface, the loudspeaker is disposed on a side of the partition wall facing the first end, and the battery is disposed on the other side of the partition wall facing the second end.

10. The earphone of claim 9, wherein
the loudspeaker has a first axis,
the battery has a second axis,
the first axis and the second axis respectively have a positive direction pointing to the ear of the user, and
in a reference plane defined by the first direction and the second direction, a projection of the first axis and a projection of the second axis intersect and an intersection angle between the positive direction of the first axis and the positive direction of the second axis is in a range of 11°-14°.
